# EUROPEAN PATENT APPLICATION

(11) **EP 4 841 697 A1**
(43) Date of publication of application: **18.11.2026**
(21) Application number: 25747865.1
(22) Date of filing: 24.01.2025
(51) Int. Cl.: H01M 4/36, H01M 4/62, H01M 10/0525

(54) **NEGATIVE ELECTRODE ACTIVE PARTICLE AND PREPARATION METHOD THEREFOR, AND NEGATIVE ELECTRODE SHEET, BATTERY AND ELECTRONIC DEVICE**

(30) Priority: 29.01.2024 CN 202410126596
(71) Applicant: GUANGDONG OPPO MOBILE TELECOMMUNICATIONS CORP., LTD., Dongguan, Guangdong 523860 (CN)
(72) Inventor: YU, Pei, Dongguan, Guangdong 523860 (CN); LI, Kui, Dongguan, Guangdong 523860 (CN); TIAN, Chen, Dongguan, Guangdong 523860 (CN)
(74) Representative: Novagraaf Technologies
(86) International application number: PCT/CN2025/074842
(87) International publication number: WO 2025/162297

(57) **Abstract**

Provided in the present application are a negative electrode active particle and a preparation method therefor, and a negative electrode sheet, a battery and an electronic device. The negative electrode active particle of the present application comprises: a skeleton, which has a plurality of pores; and silicon particles, which are located in the plurality of pores, wherein there are gaps between the silicon particles and the inner walls of the pores, and the widths of the gaps range from 0.4 nm to 1 nm. The negative electrode active particle has a first X-ray diffraction pattern, and in the first X-ray diffraction pattern, the gaps and the silicon particles satisfy a relational expression 0.6≤Ia/Ib≤0.95, wherein Ia is the minimum value of diffraction intensity in the first X-ray diffraction pattern when 20 ranges from 8.8° to 22°, Ib is the intensity of a diffraction peak of Si(111) in the first X-ray diffraction pattern when 20 ranges from 28.2° to 28.5°, and 20 is a diffraction angle. The negative electrode active particle of the present application has a low expansion rate and a high cyclic capacity retention rate.

## Description

### TECHNICAL FIELD

The present disclosure relates to the field of electronics, and in particular to a negative electrode active particle, a preparation method for a negative electrode active particle, a negative electrode plate, a battery, and an electronic device.

### BACKGROUND

Silicon materials exhibit a relatively high theoretical specific capacity (the theoretical specific capacity of silicon is 4200 mAh/g) and are among the most promising negative electrode materials for next-generation high-energy-density batteries. However, silicon itself may undergo significant volumetric expansion during lithium intercalation, which may tend to cause breakage, crack, fracture, or pulverization of silicon particles. Consequently, new Solid Electrolyte Interphase (SEI) films may be repeatedly generated on the silicon particles during charge-discharge cycles, which may accelerate consumption of the electrolyte and further lead to an excessively rapid decline in the cycle capacity retention rate of the battery.

### SUMMARY

Embodiments of the present disclosure provides a negative electrode active particle. The negative electrode active particle exhibits a relatively low expansion rate and a relatively high cycle capacity retention rate.

Some embodiments of a first aspect of the present disclosure provide a negative electrode active particle. The negative electrode active particle may include:
a framework, including a plurality of pores; and
silicon particles, located in the plurality of pores, where gaps are defined between the silicon particles and inner walls of the plurality of pores, and widths of the gaps are in a range from 0.4 nm to 1 nm.

The negative electrode active particle may exhibit a first X-ray diffraction pattern. The gaps and the silicon particles in the first X-ray diffraction pattern may satisfy a relationship of 0.6≤Ia/Ib≤0.95, where Ia is a minimum value of a diffraction intensity in a range of 2θ from 8.8° to 22° in the first X-ray diffraction pattern, Ib is an intensity of a diffraction peak of Si(111) in a range of 2θ from 28.2° to 28.5° in the first X-ray diffraction pattern, and 2θ is a diffraction angle.

Some embodiments of a second aspect of the present disclosure provide a preparation method for a negative electrode active particle. The preparation method may include:
providing a framework, where the framework includes a plurality of pores; and
introducing a silicon-source gas into the framework to deposit silicon particles in the plurality of pores to obtain the negative electrode active particle.

In some embodiments, gaps may be defined between the silicon particles and inner walls of the plurality of pores. Widths of the gaps may be in a range from 0.4 nm to 1 nm. The negative electrode active particle may exhibit a first X-ray diffraction pattern. The gaps and the silicon particles may satisfy a relationship of 0.6≤Ia/Ib≤0.95, where Ia is a minimum value of a diffraction intensity in a range of 2θ from 8.8° to 22° in the first X-ray diffraction pattern, and Ib is an intensity of a diffraction peak of Si(111) in a range of 2θ from 28.2° to 28.5° in the first X-ray diffraction pattern.

Some embodiments of a third aspect of the present disclosure provide a negative electrode plate. The negative electrode plate may include:
a negative electrode current collector; and
a negative electrode active layer, where the negative electrode active layer is disposed on a surface of the negative electrode current collector, and the negative electrode active layer includes the negative electrode active particle according to the first aspect of the present disclosure or a negative electrode active particle prepared by the preparation method for the negative electrode active particle according to the second aspect of the present disclosure.

Some embodiments of a fourth aspect of the present disclosure provide a battery. The battery may include:
an electrolyte;
a positive electrode plate, at least partially immersed in the electrolyte;
a separator, located on a side of the positive electrode plate and at least partially immersed in the electrolyte; and
the negative electrode plate according to the third aspect of the present disclosure, disposed on a side of the separator facing away from the positive electrode plate and at least partially immersed in the electrolyte.

Some embodiments of a fifth aspect of the present disclosure provide an electronic device. The electronic device may include:
a device body; and
the battery according to the fourth aspect of the present disclosure, configured to supply power to the device body.

### BRIEF DESCRIPTION OF THE DRAWINGS

In order to more clearly illustrate the technical solutions in some embodiments of the present disclosure, a brief introduction to the drawings used in some embodiments of the present disclosure is provided below. It is evident that the drawings described below are only some embodiments of the present disclosure. For those skilled in the art, other drawings may be obtained based on these drawings without creative effort.
FIG. 1 is a structural schematic view of a negative electrode active particle according to some embodiments of the present disclosure.
FIG. 2 is an enlarged view of portion I circumscribed by dashed lines in FIG. 1 of the present disclosure.
FIG. 3 is a structural schematic view of a negative electrode active particle according to some other embodiments of the present disclosure.
FIG. 4 is a schematic flowchart of a preparation method for a negative electrode active particle according to some embodiments of the present disclosure.
FIG. 5 is a schematic flowchart of a preparation method for a negative electrode active particle according to some other embodiments of the present disclosure.
FIG. 6 is a structural schematic view of a negative electrode plate according to some embodiments of the present disclosure.
FIG. 7 is a structural schematic view of a battery according to some embodiments of the present disclosure.
FIG. 8 is a cross-sectional structural schematic view of a battery according to some embodiments of the present disclosure, taken along line A-A in FIG. 7.
FIG. 9 is a structural schematic view of a positive electrode plate according to some embodiments of the present disclosure.
FIG. 10 is a first X-ray diffraction pattern of a negative electrode active particle according to Example 1 of the present disclosure.
FIG. 11 is a second X-ray diffraction pattern of a negative electrode active particle according to Example 1 of the present disclosure.
FIG. 12 is a structural schematic view of an electronic device according to some embodiments of the present disclosure.
FIG. 13 is an exploded structural schematic view of an electronic device according to some embodiments of the present disclosure.
FIG. 14 is a circuit block diagram of an electronic device according to some embodiments of the present disclosure.

Reference numerals in drawings: 100-negative electrode active particle, 10-framework, 11-pore, 20-silicon particle, 30-gap, 40-carbon coating layer, 400-negative electrode plate, 410-negative electrode current collector, 420-negative electrode active layer, 500-battery, 510-positive electrode plate, 511-positive electrode current collector, 513-positive electrode active layer, 530-separator, 550-housing, 570-end cap assembly, 600-electronic device, 610-device body, 611-display screen, 613-middle frame, 615-housing, 6151-light-transmitting portion, 616-memory, 617-processor, 618-camera module.

### DETAILED DESCRIPTION

In order to enable those skilled in the art to better understand the technical solution s of the present disclosure, the technical solutions in some embodiments of the present disclosure will be described below in conjunction with the accompanying drawings in some embodiments of the present disclosure. It is obvious that the described embodiments are only part of the embodiments of the present disclosure and not all of them. Based on some embodiments in the present disclosure, all other embodiments obtained by those skilled in the art without creative effort are within the protection scope of the present disclosure.

In the description, claims, and the above accompanying drawings of the present disclosure, the terms such as "first" and "second", etc., are used to distinguish different objects and are not used to describe a specific order. Furthermore, the terms "include", "have" and any variations thereof are intended to cover non-exclusive inclusions. For example, a process, method, system, product, or device that includes a series of operations or units is not limited to the listed operations or units, but optionally further includes unlisted operations or units, or optionally further includes other operations or units inherent to such process, method, system, product, or device.

Some embodiments of the present disclosure provide a negative electrode active particle. The negative electrode active particle may include:
a framework, including a plurality of pores; and
silicon particles, located in the plurality of pores, where gaps are defined between the silicon particles and inner walls of the plurality of pores, and widths of the gaps are in a range from 0.4 nm to 1 nm.

The negative electrode active particle may exhibit a first X-ray diffraction pattern. The gaps and the silicon particles in the first X-ray diffraction pattern may satisfy a relationship of 0.6≤Ia/Ib≤0.95, where Ia is a minimum value of a diffraction intensity in a range of 2θ from 8.8° to 22° in the first X-ray diffraction pattern, Ib is an intensity of a diffraction peak of Si(111) in a range of 2θ from 28.2° to 28.5° in the first X-ray diffraction pattern, and 2θ is a diffraction angle.

In some embodiments, the gaps and the silicon particles in the first X-ray diffraction pattern may satisfy a relationship of 0.6≤Ia/Ib≤0.85.

In some embodiments, an average pore size of the plurality of pores may be in a range from 0.8 nm to 4 nm.

In some embodiments, a pore volume V of the framework 10 may be in a range from 0.2 cm³/g to 1.5 cm³/g.

In some embodiments, the negative electrode active particle may exhibit a second X-ray diffraction pattern after being subjected to a heat treatment. The gaps and the silicon particles in the second X-ray diffraction pattern may satisfy a relationship of 0.5≤Ic/Id≤0.95, where Ic is a minimum value of a diffraction intensity in the range of 2θ from 8.8° to 22° in the second X-ray diffraction pattern, and Id is an intensity of the diffraction peak of the Si(111) in the range of 2θ from 28.2° to 28.5° in the second X-ray diffraction pattern. In some embodiments, the heat treatment may include: heating to 700 °C under an inert atmosphere, holding at 700 °C for 2 h, and cooling to room temperature.

In some embodiments, the gaps and the silicon particles in the second X-ray diffraction pattern may satisfy a relationship of 0.5≤Ic/Id≤0.85.

In some embodiments, the negative electrode active particle may further include a carbon coating layer. The carbon coating layer may coat an outer periphery of the framework.

In some embodiments, a thickness of the carbon coating layer may be in a range from 1 nm to 1000 nm.

In some embodiments, a total mass fraction of silicon element and carbon element in the negative electrode active particle may be greater than or equal to 90%. A mass ratio of the silicon element to the carbon element may be in a range from 1:99 to 95:5.

In some embodiments, the framework may be a porous carbide. The porous carbide may include at least one of nitrogen element, oxygen element, fluorine element, chlorine element, titanium element, zirconium element, vanadium element, molybdenum element, tungsten element, aluminum element, or iron element. A mass fraction of silicon element in the negative electrode active particle may be in a range from 1% to 95%. A total mass fraction of the porous carbide and the carbon coating layer in the negative electrode active particle may be in a range from 5% to 99%.

In some embodiments, a median particle size D50 of the negative electrode active particle may satisfy 300 nm≤D50≤50 µm. An average particle size D1 of the silicon particles may satisfy 0.4 nm≤D1≤2 nm. A specific surface area S of the negative electrode active particle may satisfy 0.1 m²/g≤S≤30 m²/g.

In some embodiments, the negative electrode active particle may further include a doping element. The doping element may include at least one of a non-metal element or a metal element.

In some embodiments, a specific capacity of the negative electrode active particle may be in a range from 1700 mAh/g to 2000 mAh/g.

In some embodiments, a capacity retention rate of the negative electrode active particle after 50 cycles may be greater than or equal to 95%.

Some embodiments of the present disclosure provide a preparation method for a negative electrode active particle. The preparation method may include:
providing a framework, where the framework includes a plurality of pores; and
introducing a silicon-source gas into the framework to deposit silicon particles in the plurality of pores to obtain the negative electrode active particle.

In some embodiments, gaps may be defined between the silicon particles and inner walls the plurality of pores. Widths of the gaps may be in a range from 0.4 nm to 1 nm. The negative electrode active particle may exhibit a first X-ray diffraction pattern. The gaps and the silicon particles may satisfy a relationship of 0.6≤Ia/Ib≤0.95, where Ia is a minimum value of a diffraction intensity in a range of 2θ from 8.8° to 22° in the first X-ray diffraction pattern, and Ib is an intensity of a diffraction peak of Si(111) in a range of 2θ from 28.2° to 28.5° in the first X-ray diffraction pattern.

In some embodiments, the operation of introducing the silicon-source gas into the framework to deposit the silicon particles in the plurality of pores to obtain the negative electrode active particle may include: introducing the silicon-source gas at a temperature T1 satisfying 400 °C≤T1≤700 °C to deposit the silicon particles in the plurality of pores, and controlling a ratio t/V of a deposition time t of the silicon particles to a pore volume V of the framework to be in a range of 10 gh/cm³≤t/V≤500 gh/cm³.

In some embodiments, a ratio m/V' of a mass m of the silicon-source gas to a total volume V' of the plurality of pores of the framework may satisfy 0.05 g/cm³≤m/V'≤1.8 g/cm³.

Some embodiments of the present disclosure provide a negative electrode plate. The negative electrode plate may include:
a negative electrode current collector; and
a negative electrode active layer, where the negative electrode active layer is disposed on a surface of the negative electrode current collector, and the negative electrode active layer includes the negative electrode active particle according to the above embodiments of the present disclosure or a negative electrode active particle prepared by the preparation method for the negative electrode active particle according to the above embodiments of the present disclosure.

Some embodiments of the present disclosure provide a battery. The battery may include:
an electrolyte;
a positive electrode plate, at least partially immersed in the electrolyte;
a separator, located on a side of the positive electrode plate and at least partially immersed in the electrolyte; and
the negative electrode plate according to the above embodiments of the present disclosure, disposed on a side of the separator facing away from the positive electrode plate and at least partially immersed in the electrolyte.

Some embodiments of the present disclosure provide an electronic device. The electronic device may include:
a device body; and
the battery according to the above embodiments of the present disclosure, configured to supply power to the device body.

The technical solutions in some embodiments of the present disclosure will be described below in conjunction with the accompanying drawings.

It should be noted that, for convenience of description, in some embodiments of the present disclosure, the same reference numerals in drawings denote the same components, and detailed description of the same components is omitted in different embodiments for the sake of brevity.

With the continuous development of lithium-ion battery technology, lithium-ion batteries, as compared with other types of batteries such as lead-acid batteries and nickel-cadmium batteries, etc., exhibit advantages including high specific capacity, no memory effect, high operating voltage, fast charging capability, wide operating temperature range, long cycle life, small size, light weight, etc. At present, lithium-ion batteries have been widely used in fields such as mobile phones, laptop computers, electric vehicles, energy storage cabinets, etc., and their range of applications is becoming increasingly broad.

Silicon materials exhibit a relatively high theoretical specific capacity (the theoretical specific capacity of silicon is 4200 mAh/g) and are among the most promising negative electrode materials for next-generation high-energy-density batteries. However, silicon itself may undergo significant volumetric expansion during lithium intercalation, which may tend to cause crack, fracture, or pulverization of silicon particles. Consequently, new Solid Electrolyte Interphase (SEI) films may be repeatedly generated on the silicon particles during charge-discharge cycles, which may accelerate consumption of the electrolyte and further lead to an excessively rapid decline in the cycle capacity retention rate of the battery.

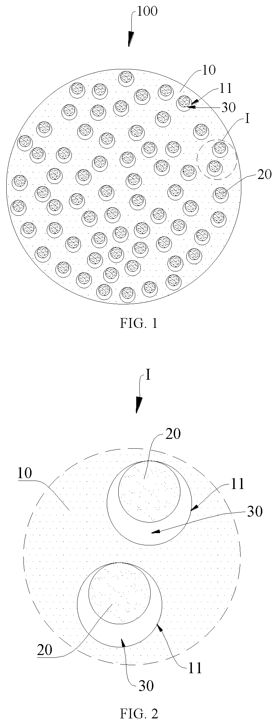

As shown in FIGS. 1 and 2, some embodiments of the present disclosure provide a negative electrode active particle 100. The negative electrode active particle 100 may include a framework 10 and silicon particles 20. The framework 10 may include or have a plurality of pores 11. The silicon particles 20 may be located in the plurality of pores 11. Gaps 30 may be defined between the silicon particles 20 and inner walls of the plurality of pores 11. Widths of the gaps 30 may be in a range from 0.4 nm to 1 nm. The negative electrode active particle 100 may exhibit a first X-ray diffraction pattern. The gaps 30 and the silicon particles 20 in the first X-ray diffraction pattern may satisfy a relationship of 0.6≤Ia/Ib≤0.95, where Ia is a minimum value of a diffraction intensity in a range of 2θ from 8.8° to 22° in the first X-ray diffraction pattern, Ib is an intensity of a diffraction peak of Si(111) in a range of 2θ from 28.2° to 28.5° in the first X-ray diffraction pattern, and 2θ is a diffraction angle.

The negative electrode active particle 100 of some embodiments of the present disclosure may be used in a battery (e.g., a lithium battery). In some embodiments, the negative electrode active particle 100 may serve as an active material of a negative electrode active layer of a negative electrode plate of the battery.

In some embodiments of the present disclosure, when referring to a numerical range from a to b, unless otherwise specified, the numerical value may include any value between a and b, including the endpoint values a and b.

It should be noted that, in actual testing, the diffraction angle of the diffraction peak of the Si(111) may shift slightly, but generally falls within the range of 28.2° to 28.5°.

It should be noted that Ib may represent the intensity of the diffraction peak of the Si(111) in the first X-ray diffraction pattern.

It should be noted that the "pore 11" described in some embodiments of the present disclosure may refer to the pore 11 present in the framework 10 before the silicon particles 20 are accommodated in or disposed in the framework 10. The "gap 30" may refer to a void in the negative electrode active particle 100. That is, a portion of the pore 11 of the framework 10 that is not occupied by the silicon particle 20 (i.e., the unfilled portion of the pore) after the silicon particle 20 is accommodated in the pore 11 form a void, and the void may be referred to as the gap 30.

It should be noted that the framework 10 may include or have a plurality of pores 11. It will be understood that the framework 10 may be a porous structure. In some embodiments, the framework 10 may include, but is not limited to, at least one of a porous carbon framework 10, a porous carbide framework 10, etc.

It should be noted that there may be a plurality of gaps 30. The plurality of gaps 30 may be distributed in the negative electrode active particle 100.

It will be understood that the negative electrode active particle 100 in some embodiments of the present disclosure may be a silicon-based negative electrode material or a silicon-carbon composite material.

It should be noted that, in the first X-ray diffraction pattern, the diffraction intensity at a diffraction angle 2θ of 8.8° may be a diffraction intensity of the gaps 30 having a width of 0.4 nm in the first X-ray diffraction pattern. In the first X-ray diffraction pattern, the diffraction intensity at a diffraction angle 2θ of 22°may be a diffraction intensity of the gaps 30 having a width of 1 nm in the first X-ray diffraction pattern. Ia may be the minimum diffraction intensity of the gaps 30 having a width in a range of 0.4 nm to 1 nm in the first X-ray diffraction pattern.

In some embodiments, the widths of the gaps 30 may be, but is not limited to, 0.4 nm, 0.5 nm, 0.6 nm, 0.7 nm, 0.8 nm, 0.9 nm, 1 nm, etc. In a case where the widths of the gaps 30 are too small, the content of the gaps 30 may be too low. When the negative electrode active particle 100 is used in a battery and the battery is subjected to charge-discharge cycles, the gaps 30 may be insufficient to buffer or accommodate the expansion of the silicon particles 20 during lithium intercalation. In this case, the expansion rate of the negative electrode active particle 100 may be increased, the consumption rate of the electrolyte may be accelerated, and the cycle capacity retention rate of the battery may be reduced. In a case where the widths of the gaps 30 are too large, the content of the gaps 30 may be excessive, such that the energy density of the negative electrode active particle 100 may be reduced.

In some embodiments, Ia/Ib may be, but is not limited to, 0.6, 0.62, 0.65, 0.68, 0.7, 0.73, 0.75, 0.78, 0.8, 0.83, 0.85, 0.88, 0.9, 0.92, 0.95, etc. In a case where Ia/Ib is too small, the content of the gaps 30 may be too low. When the negative electrode active particle 100 is used in a battery and the battery is subjected to charge-discharge cycles, the gaps 30 may be insufficient to buffer or accommodate the expansion of the silicon particles 20 during lithium intercalation. In this case, the expansion rate of the negative electrode active particle 100 may be increased, and the negative electrode active particle 100 may be prone to fracture. In this way, new SEI films may be repeatedly generated on the surface of the negative electrode active particle 100, thereby increasing the consumption rate of electrolyte and reducing the cycle capacity retention rate of the battery. In a case where Ia/Ib is too large, the content of the gaps 30 may be excessive. In this case, the energy density of the negative electrode active particle 100 may be reduced.

In some embodiments, the gaps 30 and the silicon particles 20 in the first X-ray diffraction pattern may satisfy a relationship of 0.6≤Ia/Ib≤0.85. In this way, the negative electrode active particle 100 may exhibit a relatively low expansion rate during lithium intercalation, making the negative electrode active particle 100 less prone to fracture during lithium intercalation, thereby providing a relatively high cycle capacity retention rate. The negative electrode active particle 100 may also exhibit a relatively high energy density.

The negative electrode active particle 100 in some embodiments of the present disclosure may include the framework 10 and the silicon particles 20. The framework 10 may include the plurality of pores 11. The silicon particles 20 may be located or disposed in the plurality of pores 11. The gaps 30 may be defined between the silicon particles 20 and the inner walls of the plurality of pores 11. The widths of the gaps 30 may be in a range from 0.4 nm to 1 nm. The negative electrode active particle 100 may exhibit a first X-ray diffraction pattern. The gaps 30 and the silicon particles 20 may satisfy a relationship of 0.6≤Ia/Ib≤0.95, where Ia is a minimum value of a diffraction intensity in a range of 2θ from 8.8° to 22° in the first X-ray diffraction pattern, Ib is an intensity of a diffraction peak of Si(111) in a range of 2θ from 28.2° to 28.5° in the first X-ray diffraction pattern, and 2θ is a diffraction angle. In a case where 0.6≤Ia/Ib≤0.95, a sufficient number of the gaps 30 having the widths of 0.4 nm to 1.0 nm may be present in the negative electrode active particle 100, which may buffer the expansion of the silicon particles 20 during lithium intercalation. The gaps 30 having the widths of 0.4 nm to 1.0 nm may provide sufficient buffering spaces for the expansion of the silicon particles 20 less than 2 nm, reduce damage to the negative electrode active particle 100 caused by the expansion of the silicon particles 20, and reduce the expansion of the negative electrode active particle 100. In this way, the negative electrode active particle 100 may exhibit a relatively low expansion rate. Since the negative electrode active particle 100 has a relatively low expansion rate and suffers less damage, repeated generation of SEI films on the surface of the negative electrode active particle 100 during charge-discharge cycles may be reduced, the consumption of the electrolyte may be slowed down, and the cycle capacity retention rate of the negative electrode active particle 100 may be improved.

In some embodiments, an average pore size of the plurality of pores may be in a range from 0.8 nm to 4 nm. In some embodiments, the average pore size of the plurality of pores 11 may be, but is not limited to, 0.8 nm, 1.0 nm, 1.2 nm, 1.4 nm, 1.6 nm, 1.8 nm, 2.0 nm, 2.2 nm, 2.4 nm, 2.6 nm, 2.8 nm, 3.0 nm, 3.2 nm, 3.4 nm, 3.6 nm, 3.8 nm, 4 nm, etc.

In some embodiments, the pore size of the plurality of pores 11 of the framework 10 may be measured by a nitrogen adsorption-desorption method.

In some embodiments, a pore volume V of the framework 10 may be in a range from 0.2 cm³/g to 1.5 cm³/g. In some embodiments, the pore volume V of the framework 10 may be, but is not limited to, 0.2 cm³/g, 0.3 cm³/g, 0.4 cm³/g, 0.5 cm³/g, 0.6 cm³/g, 0.7 cm³/g, 0.8 cm³/g, 0.9 cm³/g, 1.0 cm³/g, 1.1 cm³/g, 1.2 cm³/g, 1.3 cm³/g, 1.4 cm³/g, 1.5 cm³/g, etc. In a case where the pore volume of the framework 10 is too small, the framework 10 may be unable to deposit or accommodate deposition of a sufficient amount of the silicon particles 20. In this case, the gravimetric capacity of the negative electrode active particle 100 may be reduced. In a case where the pore volume of the framework 10 is too large, an excessive number of pores may reduce the energy density of the negative electrode active particle 100. The proportion of the framework 10 may be relatively low, and the framework 10 may be prone to fracture, thereby reducing the cycle performance of the negative electrode active particle 100.

The "pore volume" in the present disclosure may refer to a total volume of the pores 11 per unit mass of the framework 10.

In some embodiments, the negative electrode active particle 100 may exhibit a second X-ray diffraction pattern after being subjected to a heat treatment. The gaps 30 and the silicon particles 20 in the second X-ray diffraction pattern may satisfy a relationship of 0.5≤Ic/Id≤0.95, where Ic is a minimum value of a diffraction intensity in the range of 2θ from 8.8° to 22° in the second X-ray diffraction pattern, and Id is an intensity of the diffraction peak of the Si(111) in the range of 2θ from 28.2° to 28.5° in the second X-ray diffraction pattern. In some embodiments, the heat treatment may include: heating to 700 °C under an inert atmosphere, holding at 700 °C for 2 h, and cooling to room temperature.

In some embodiments, the inert atmosphere may be, but is not limited to, at least one of a nitrogen atmosphere or an argon atmosphere, etc.

In some embodiments, the heat treatment may be performed under a vacuum condition.

In some embodiments, the temperature of the heat treatment may be, but is not limited to, 650°C to 750°C. For example, the temperature of the heat treatment may be 650 °C, 680 °C, 700 °C, 725 °C, 750 °C, etc. In a case where the temperature of the heat treatment is too low, amorphous silicon may be unable to be converted into crystalline silicon, and no crystalline silicon diffraction peak may appear in the second X-ray diffraction pattern. In a case where the temperature is too high, silicon and carbon may be prone to react to form silicon carbide.

In some embodiments, Ic/Id may be, but is not limited to, 0.5, 0.52, 0.55, 0.58, 0.6, 0.62, 0.65, 0.68, 0.7, 0.73, 0.75, 0.78, 0.8, 0.83, 0.85, 0.88, 0.9, 0.92, 0.95, etc. In a case where Ic/Id is too small, the content of the gaps 30 may be too low. When the negative electrode active particle 100 is used in a battery and the battery is subjected to charge-discharge cycles, the gaps 30 may be insufficient to buffer or accommodate the expansion of the silicon particles 20 during lithium intercalation. In this case, the expansion rate of the negative electrode active particle 100 may be excessively high, the consumption rate of the electrolyte may be accelerated, and the cycle capacity retention rate of the battery may be reduced. The negative electrode active particle 100 may be prone to form a Li₁₅Si₄ crystalline phase during lithium intercalation. During the formation of the crystalline phase, the negative electrode active particle 100 may experience higher internal stress and greater volume change, such that the cycle performance of the negative electrode active particle 100 may be degraded. In a case where Ic/Id is too large, the content of the gaps 30 may be excessive, such that the energy density of the negative electrode active particle 100 may be reduced.

In some embodiments, by satisfying 0.6≤Ia/Ib≤0.95, the formation of the Li₁₅Si₄ crystalline phase during lithium intercalation of the negative electrode active particle 100 may be reduced. In this way, the volume change of the negative electrode active particle 100 during lithium intercalation may be reduced, and fracture of the negative electrode active particle 100 caused by the formation of the Li₁₅Si₄ crystalline phase may be better alleviated. The negative electrode active particle 100 may have a more stable silicon structure, such that the negative electrode active particle 100 may exhibit a higher cycle capacity retention rate. The negative electrode active particle 100 may also exhibit a higher energy density.

In some embodiments, the gaps 30 and the silicon particles 20 in the second X-ray diffraction pattern may satisfy a relationship of 0.5≤Ic/Id≤0.85. In this way, the negative electrode active particle 100 may exhibit a lower expansion rate during lithium intercalation, such that the negative electrode active particle 100 may be less prone to fracture during lithium intercalation, thereby providing a higher cycle capacity retention rate. The negative electrode active particle 100 may also exhibit a higher energy density.

In some embodiments, the gaps 30 and the silicon particles 20 in the second X-ray diffraction pattern may satisfy a relationship of 0.5≤Ic/Id≤0.75. In this way, the negative electrode active particle 100 may exhibit a lower expansion rate during lithium intercalation, such that the negative electrode active particle 100 may be less prone to fracture during lithium intercalation, thereby providing a higher cycle capacity retention rate. The negative electrode active particle 100 may also exhibit a higher energy density.

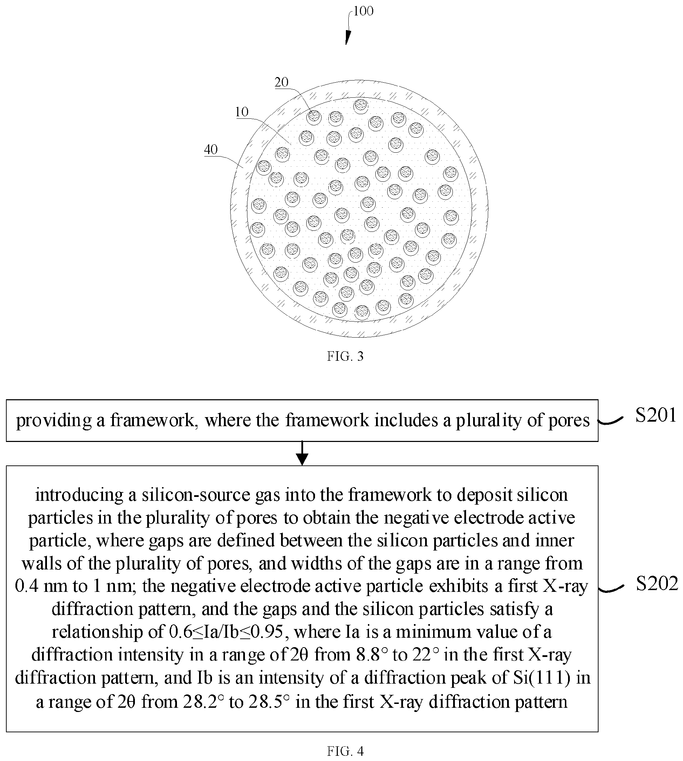

As shown in FIG. 3, in some embodiments, the negative electrode active particle 100 may further include a carbon coating layer 40 (also referred to as "carbon cladding layer"). The carbon coating layer 40 may be wrapped or disposed around, or may coat an outer periphery of the framework 10.

It will be understood that the carbon coating layer 40 may be configured to seal the pores 11 of the framework 10, so as to reduce the risk of exposure of the silicon particles 20 at the surface of the negative electrode active particle 100. Both the framework 10 and the silicon particles 20 may be enclosed or encapsulated within the carbon coating layer 40.

In a case where the silicon particles 20 are exposed at the surface of the negative electrode active particle 100, the silicon particles 20 may be in direct contact with the electrolyte, which may cause side reactions and consume active silicon and the electrolyte. In this case, the specific capacity of the silicon particles 20 may be reduced, and the cycle capacity retention rate of the negative electrode active particle 100 may continuously decline with an increase in cycle numbers. In some embodiments, the negative electrode active particle 100 may include the carbon coating layer 40. When the negative electrode active particle 100 is used in a battery, it is possible to reduce the occurrence of direct contact between the silicon particles 20 and the electrolyte via the carbon coating layer 40, thereby reducing excessive side reactions. In this way, the negative electrode active particle 100 may exhibit a higher cycle capacity retention rate, particularly high-temperature cycle performance.

In some embodiments, a thickness of the carbon coating layer 40 may be in a range of 1 nm to 1000 nm. In some embodiments, the thickness of the carbon coating layer 40 may be, but is not limited to, 1 nm, 3 nm, 5 nm, 8 nm, 10 nm, 15 nm, 20 nm, 30 nm, 40 nm, 50 nm, 60 nm, 70 nm, 80 nm, 90 nm, 100 nm, 150 nm, 200 nm, 300 nm, 400 nm, 500 nm, 600 nm, 700 nm, 800 nm, 900 nm, 1000 nm, etc. In some embodiments, in a case where the thickness of the carbon coating layer 40 is too large, the content of carbon element in the negative electrode active particle 100 may be excessively high and the proportion of the silicon may decrease. In this case, the specific capacity of the negative electrode active particle 100 may be reduced. In a case where the thickness of the carbon coating layer 40 is too small, the framework 10 may not be completely coated or covered by the carbon coating layer 40, such that the silicon particles 20 may not be completely isolated from the electrolyte. As a result, side reactions may be increased, and the cycle capacity retention rate of the negative electrode active particle 100 may be reduced.

In some embodiments, the thickness of the carbon coating layer 40 may be in a range of 2 nm to 900 nm. In this way, the negative electrode active particle 100 may exhibit a higher specific capacity while also exhibiting a higher cycle capacity retention rate.

In some embodiments, the thickness of the carbon coating layer 40 may be in a range of 2 nm to 500 nm. In this way, the negative electrode active particle 100 may exhibit a higher specific capacity while also exhibiting a higher cycle capacity retention rate.

In some embodiments, the thickness of the carbon coating layer 40 may be in a range of 5 nm to 100 nm. In this way, the negative electrode active particle 100 may exhibit a higher specific capacity while also exhibiting a higher cycle capacity retention rate.

In some embodiments, a total mass fraction of silicon element and carbon element in the negative electrode active particle 100 may be greater than or equal to 90%. A mass ratio of the silicon element to the carbon element may be in a range from 1:99 to 95:5.

In some embodiments, in the negative electrode active particle 100, the total mass fraction of the silicon element and the carbon element may be, but is not limited to, 90%, 91%, 92%, 93%, 94%, 95%, 96%, 97%, 98%, 99%, etc. In a case where the total mass fraction of the silicon element and the carbon element in the negative electrode active particle 100 is too high, the energy density of the negative electrode active particle 100 may be reduced.

In some embodiments, in the negative electrode active particle 100, the mass ratio of the silicon element to the carbon element may be, but is not limited to, 1:99, 1:90, 1:80, 1:70, 1:50, 1:30, 1:10, 1:1, 3:1, 5:1, 7:1, 10:1, 13:1, 15:1, 17:1, 95:5, etc. In a case where the mass ratio of the silicon element to the carbon element in the negative electrode active particle 100 is too low, the content of the active material in the negative electrode active particle 100 may be insufficient, such that the specific capacity of the negative electrode active particle 100 may be reduced. In a case where the mass ratio of the silicon element to the carbon element in the negative electrode active particle 100 is too high, the framework 10 may be unable to support the expansion of the silicon particles 20 during lithium intercalation of the negative electrode active particle 100. In this case, the negative electrode active particle 100 may be prone to fracture, and the cycle performance of the battery using or employing the negative electrode active particle 100 may be affected. In a case where the mass ratio of the silicon element to the carbon element in the negative electrode active particle 100 falls within the aforesaid range, the negative electrode active particle 100 may exhibit a relatively high specific capacity while also exhibiting a relatively high cycle capacity retention rate.

In some embodiments, the mass ratio of the silicon element to the carbon element may be in a range from 2:8 to 7:3. In a case where the mass ratio of the silicon element to the carbon element in the negative electrode active particle 100 falls within the aforesaid range, the negative electrode active particle 100 may exhibit both a relatively high specific capacity and a relatively high cycle capacity retention rate.

In some embodiments, the negative electrode active particle 100 may further include a doping element. The doping element may include at least one of a non-metal element or a metal element.

In some embodiments, the non-metal element may include at least one of oxygen element, sulfur element, nitrogen element, phosphorus element, or hydrogen element, etc. Doping of the oxygen element may alleviate the expansion of the silicon particles 20 during lithium intercalation of the negative electrode active particle 100, thereby reducing the expansion rate of the negative electrode active particle 100 and improving the cycle performance of the battery employing the negative electrode active particle 100. Doping of the sulfur element, nitrogen element, or phosphorus element may improve the electrical conductivity of the negative electrode active particle 100, thereby improving the kinetic performance of the battery using or employing the negative electrode active particle 100. The hydrogen element may maintain silicon in a certain amorphous state, which may facilitate the cycle performance of the battery employing the negative electrode active particle 100.

In some embodiments, the metal element may include one of lithium element, aluminum element, magnesium element, titanium element, sodium element, copper element, or iron element, etc. Doping of the lithium element may provide a lithium compensation effect, which may help improve the first-cycle efficiency of the battery employing the negative electrode active particle 100. The aluminum element, magnesium element, titanium element, sodium element, copper element, or iron element may serve as a constituent element of the framework 10. For example, porous carbides containing these metal elements may be used as the framework 10, such that the electrical conductivity of the negative electrode active particle 100 may be improved, and the kinetic performance of the battery employing the negative electrode active particle 100 may be improved.

In some embodiments, the framework 10 may be a porous carbide. The porous carbide may include at least one of nitrogen element, oxygen element, fluorine element, chlorine element, titanium element, zirconium element, vanadium element, molybdenum element, tungsten element, aluminum element, or iron element. A mass fraction of the silicon element in the negative electrode active particle 100 may be in a range from 1% to 95%. A total mass fraction of the porous carbide and the carbon coating layer 40 in the negative electrode active particle 100 may be in a range from 5% to 99%.

It will be understood that the porous carbide includes at least one of nitrogen element, oxygen element, fluorine element, chlorine element, titanium element, zirconium element, vanadium element, molybdenum element, tungsten element, aluminum element, or iron element, etc. The porous carbide may exhibit a relatively high strength, which may better reduce the fracture of the negative electrode active particle 100 during lithium intercalation and improve the cycle capacity retention rate of the battery employing the negative electrode active particle 100. The porous carbide may exhibit a relatively high electrical conductivity, which may improve the kinetic performance of the negative electrode active particle 100, thereby improving the kinetic performance of the battery employing the negative electrode active particle 100.

In some embodiments, the porous carbide may be, but is not limited to, titanium carbide (TiC).

In some embodiments, in the negative electrode active particle 100, the mass fraction of the silicon element may be, but is not limited to, 1%, 3%, 5%, 10%, 20%, 30%, 40%, 50%, 60%, 70%, 80%, 90%, 95%, etc.

In some embodiments, in the negative electrode active particle 100, the total mass fraction of the porous carbide and the carbon coating layer 40 may be, but is not limited to, 5%, 8%, 10%, 20%, 30%, 40%, 50%, 60%, 70%, 80%, 90%, 95%, 99%, etc.

In some embodiments, in a case where the mass fraction of the silicon element is too low and the total mass fraction of the porous carbide and the carbon coating layer 40 is too high, the content of active material in the negative electrode active particle 100 may be too low, and the specific capacity of the negative electrode active particle 100 may be reduced. In a case where the mass fraction of the silicon element is too high and the total mass fraction of the porous carbide and the carbon coating layer 40 is too low, the framework 10 may be unable to support the expansion of the silicon particles 20 during lithium intercalation of the negative electrode active particle 100. In this case, the negative electrode active particle 100 may be prone to fracture, and the cycle performance of the battery employing the negative electrode active particle 100 may be affected.

In some embodiments, the framework 10 may be a porous carbide. The porous carbide may include at least one of nitrogen element, oxygen element, fluorine element, chlorine element, titanium element, zirconium element, vanadium element, molybdenum element, tungsten element, aluminum element, or iron element. The mass fraction of the silicon element in the negative electrode active particle 100 may be in a range from 20% to 70%. The total mass fraction of the porous carbide and the carbon coating layer 40 in the negative electrode active particle 100 may be in a range from 30% to 80%. In this way, the negative electrode active particle 100 may exhibit both a relatively high specific capacity and a relatively high cycle capacity retention rate.

In some embodiments, a median particle size D50 of the negative electrode active particle 100 may satisfy 300 nm≤D50≤50 µm.

In some embodiments, the median particle size D50 of the negative electrode active particle 100 may be, but is not limited to, 300 nm, 400 nm, 500 nm, 600 nm, 700 nm, 800 nm, 1 µm, 3 µm, 5 µm, 7 µm, 10 µm, 13 µm, 15 µm, 18 µm, 20 µm, 25 µm, 30 µm, 35 µm, 40 µm, 45 µm, 50 µm, etc.

In some embodiments, in a case where the median particle size D50 of the negative electrode active particle 100 is too large, when the negative electrode active particle 100 is used in a lithium battery, the transport path of lithium ions inside the negative electrode active particle 100 may become longer (or the transport distance of the lithium ions is increased). In this case, the transport impedance of the lithium ions may be increased, such that kinetic performance may be deteriorated. In a case where the median particle size D50 of the negative electrode active particle 100 is too small, the specific surface area of the negative electrode active particle 100 may be increased, the contact area between the negative electrode active particle 100 and the electrolyte may be increased, and more SEI films may be formed. In this case, repeated damage and growth/reformation of the SEI films during charge-discharge cycles of the battery may consume more electrolyte, tending to reduce the cycle capacity retention rate of the battery. In a case where the median particle size D50 of the negative electrode active particle 100 satisfies 300 nm≤D50≤50 µm, the negative electrode active particle may exhibit relatively good kinetic performance while also exhibiting a relatively high cycle capacity retention rate.

In some embodiments, the median particle size D50 of the negative electrode active particle 100 may satisfy 1 µm≤D50≤20 µm. In a case where the median particle size D50 of the negative electrode active particle 100 falls within the aforesaid range, the negative electrode active particle may exhibit relatively good kinetic performance while also exhibiting a relatively high cycle capacity retention rate.

In some embodiments, the median particle size D50 of the negative electrode active particle 100 may satisfy 3 µm≤D50≤15 µm. In a case where the median particle size D50 of the negative electrode active particle 100 falls within the aforesaid range, the negative electrode active particle may exhibit relatively good kinetic performance while also exhibiting a relatively high cycle capacity retention rate.

In some embodiments, the median particle size D50 of the negative electrode active particle 100 may satisfy 5 µm≤D50≤12 µm. In a case where the median particle size D50 of the negative electrode active particle 100 falls within the aforesaid range, the negative electrode active particle may exhibit relatively good kinetic performance while also exhibiting a relatively high cycle capacity retention rate.

In some embodiments, an average particle size D1 of the silicon particles 20 may satisfy 0.4 nm≤D1≤2 nm. In some embodiments, the average particle size D1 of the silicon particles 20 may be, but is not limited to, 0.4 nm, 0.5 nm, 0.6 nm, 0.7 nm, 0.8 nm, 0.9 nm, 1.0 nm, 1.1 nm, 1.2 nm, 1.3 nm, 1.4 nm, 1.5 nm, 1.6 nm, 1.7 nm, 1.8 nm, 1.9 nm, 2.0 nm, etc. In a case where the average particle size of the silicon particles 20 is too small, the silicon may exist in an atomic state and may be unable to form a silicon phase. In this case, intercalation of the lithium ions may be reduced, such that the specific capacity of the negative electrode active particle 100 may be reduced. In a case where the average particle size of the silicon particles 20 is too large, the Li₁₅Si₄ crystalline phase may be prone to be formed during lithium intercalation of the negative electrode active particle 100. The occurrence of the phase transition may cause higher internal stress and greater volume change in the negative electrode active particle 100, such that the negative electrode active particle 100 may be more prone to fracture, and the cycle capacity retention rate of the negative electrode active particle 100 may be reduced. In a case where the average particle size D1 of the silicon particles 20 satisfies 0.4 nm≤D1≤2 nm, the silicon particles 20 may have a sufficiently small size. In this case, the stress experienced by the silicon particles 20 during lithium intercalation and deintercalation may be sufficiently low, fracture of the negative electrode active particle 100 may be reduced, and the stability of the silicon structure may be ensured, thereby further improving the cycle performance of the negative electrode active particle 100.

In some embodiments, the average particle size D1 of the silicon particles 20 may satisfy 0.5 nm≤D1≤1.8 nm. In a case where the average particle size of the silicon particles 20 falls within this range, the Li₁₅Si₄ crystalline phase may be less prone to be formed during lithium intercalation of the negative electrode active particle 100. In this way, the structural stability of the negative electrode active particle 100 may be better improved, such that the negative electrode active particle 100 may exhibit a higher cycle capacity retention rate.

In some embodiments, the average particle size D1 of the silicon particles 20 may satisfy 0.7 nm≤D1≤1.8 nm. In a case where the average particle size of the silicon particles 20 falls within this range, the Li₁₅Si₄ crystalline phase may be less prone to be formed during lithium intercalation of the negative electrode active particle 100. In this way, the structural stability of the negative electrode active particle 100 may be better improved, such that the negative electrode active particle 100 may exhibit a higher cycle capacity retention rate.

In some embodiments, the average particle size of the silicon particles 20 may be measured by the following method: heating the negative electrode active particle 100 under an inert atmosphere (e.g., nitrogen or argon) to 700 °C, holding at 700°C for 2 h, and cooling to room temperature to obtain a second X-ray diffraction pattern of the heat-treated negative electrode active particle 100. The average particle size of the silicon particles 20 may be calculated from the full width at half maximum of the diffraction peak of the Si(111) near 2θ = 28.4° in the second X-ray diffraction pattern, using the Scherrer equation.

In some embodiments, a specific surface area S of the negative electrode active particle 100 may satisfy 0.1 m²/g≤S≤30 m²/g. In some embodiments, the specific surface area S of the negative electrode active particle 100 may be, but is not limited to, 0.1 m²/g, 0.3 m²/g, 0.5 m²/g, 0.8 m²/g, 1 m²/g, 3 m²/g, 5 m²/g, 8 m²/g, 10 m²/g, 12 m²/g, 14 m²/g, 16 m²/g, 18 m²/g, 20 m²/g, 22 m²/g, 24 m²/g, 26 m²/g, 28 m²/g, 30 m²/g, etc. In a case where the specific surface area of the negative electrode active particle 100 is relatively small, the contact area between the negative electrode active particle 100 and the electrolyte may be better reduced, thereby reducing consumption of the electrolyte during cycles and reducing the occurrence of a decrease in the cycle capacity retention rate of the negative electrode active particle. However, in a case where the specific surface area of the negative electrode active particle 100 is too small, the particle size of the negative electrode active particle 100 may be relatively large. The relatively large size may lengthen the transport path of lithium ions inside the negative electrode active particle 100, and the transport impedance of the lithium ions may be increased, such that the kinetic performance of the negative electrode active particle 100 may be deteriorated. In a case where the specific surface area of the negative electrode active particle 100 is too large, when the negative electrode active particle 100 is used in a lithium battery, the contact area between the negative electrode active particle 100 and the electrolyte may be increased, and more SEI films may be formed. Repeated damage and growth/reformation of the SEI films during charge-discharge cycles of the battery may consume more electrolyte, tending to reduce the cycle capacity retention rate of the battery.

It should be noted that, unless otherwise specified, the "specific surface area" in the present disclosure may refer to the BET specific surface area, i.e., a total area per unit mass of a material. "BET" is an acronym formed from the initials of the surnames of three scientists Brunauer, Emmett, and Teller.

In some embodiments, the specific surface area S of the negative electrode active particle 100 may satisfy 1 m²/g≤S≤20 m²/g. In this way, the negative electrode active particle 100 may exhibit a higher cycle capacity retention rate.

In some embodiments, the specific surface area S of the negative electrode active particle 100 may satisfy 1 m²/g≤S≤10 m²/g. In this way, the negative electrode active particle 100 may exhibit a higher cycle capacity retention rate.

In some embodiments, a specific capacity of the negative electrode active particle 100 may be in a range from 1700 mAh/g to 2000 mAh/g. In some embodiments, the specific capacity of the negative electrode active particle 100 may be, but is not limited to, 1700 mAh/g, 1750 mAh/g, 1800 mAh/g, 1850 mAh/g, 1900 mAh/g, 1950 mAh/g, 2000 mAh/g, etc.

In some embodiments, a capacity retention rate of the negative electrode active particle 100 after 50 cycles may be greater than or equal to 95%. In some embodiments, the capacity retention rate of the negative electrode active particle 100 after 50 cycles may be greater than or equal to 96%. In some embodiments, the capacity retention rate of the negative electrode active particle 100 after 50 cycles may be greater than or equal to 97%. In some embodiments, the capacity retention rate of the negative electrode active particle 100 after 50 cycles may be, but is not limited to, 95%, 95.5%, 96%, 96.5%, 97%, 97.5%, 98.5%, 99%, etc.

The negative electrode active particle 100 according to some embodiments of the present disclosure may be prepared by methods described in the following embodiments of the present disclosure. However, the negative electrode active particle 100 may also be prepared by other methods. The preparation methods in some embodiments of the present disclosure are merely one or more preparation methods for the negative electrode active particle 10 of the present disclosure, and should not be understood as limiting the negative electrode active particle 10 provided in some embodiments of the present disclosure.

As shown in FIG. 4, some embodiments of the present disclosure provide a preparation method for a negative electrode active particle. The preparation method may include operations S201 to S202.

At the operation S201, a framework 10 may be provided. The framework 10 may include a plurality of pores 11.

For detailed descriptions of the framework 10 and the pores 11, reference may be made to the relevant parts of the foregoing embodiments, and details are not repeated herein.

At the operation S202, a silicon-source gas may be introduced into the framework 10 to deposit silicon particles 20 in the plurality of pores 11 to obtain the negative electrode active particle 100. Gaps 30 may be defined between the silicon particles 20 and inner walls of the plurality of pores 11. Widths of the gaps 30 may be in a range from 0.4 nm to 1 nm. The negative electrode active particle 100 may exhibit a first X-ray diffraction pattern. The gaps 30 and the silicon particles 20 may satisfy a relationship of 0.6≤Ia/Ib≤0.95, where Ia is a minimum value of a diffraction intensity in a range of 2θ from 8.8° to 22° in the first X-ray diffraction pattern, and Ib is an intensity of a diffraction peak of Si(111) in a range of 2θ from 28.2° to 28.5° in the first X-ray diffraction pattern.

In some embodiments, the silicon-source gas may be, but is not limited to, at least one of silane, disilane, dichlorosilane, or trichlorosilane, etc.

In some embodiments, for descriptions of other features such as the negative electrode active particle 100 and the silicon particles 20, etc., reference may be made to the corresponding parts of the foregoing embodiments, and details are not repeated herein.

The negative electrode active particle 100 prepared by the preparation method for the negative electrode active particle 100 according to some embodiments of the present disclosure may include the framework 10 and the silicon particles 20. The framework 10 may include the plurality of pores 11. The silicon particles 20 may be located or disposed in the plurality of pores 11. The gaps 30 may be defined between the silicon particles 20 and the inner walls of the plurality of pores 11. The widths of the gaps 30 may be in a range from 0.4 nm to 1 nm. The negative electrode active particle 100 may exhibit a first X-ray diffraction pattern. The gaps 30 and the silicon particles 20 may satisfy a relationship of 0.6≤Ia/Ib≤0.95, where Ia is a minimum value of a diffraction intensity in a range of 2θ from 8.8° to 22° in the first X-ray diffraction pattern, Ib is an intensity of a diffraction peak of Si(111) in a range of 2θ from 28.2° to 28.5° in the first X-ray diffraction pattern, and 2θ is a diffraction angle. In a case where 0.6≤Ia/Ib≤0.95, a sufficient number of the gaps 30 having the widths of 0.4 nm to 1.0 nm may be present in the negative electrode active particle 100, which may buffer the expansion of the silicon particles 20 during lithium intercalation. The gaps 30 having the widths of 0.4 nm to 1.0 nm may provide sufficient buffering spaces for the expansion of the silicon particles 20 less than 2 nm, reduce damage to the negative electrode active particle 100 caused by the expansion of the silicon particles 20, and reduce the expansion of the negative electrode active particle 100. In this way, the negative electrode active particle 100 may exhibit a relatively low expansion rate. Since the negative electrode active particle 100 has a relatively low expansion rate and suffers less damage, repeated generation of SEI films on the surface of the negative electrode active particle 100 during charge-discharge cycles may be reduced, the consumption of the electrolyte may be slowed down, and the cycle capacity retention rate of the negative electrode active particle 100 may be improved.

In some embodiments, the operation of introducing the silicon-source gas into the framework 10 to deposit the silicon particles 20 in the plurality of pores 11 to obtain the negative electrode active particle 100 may include the following operations.

The silicon-source gas may be introduced at a temperature T1 satisfying 400 °C≤T1≤700 °C to deposit the silicon particles 20 in the plurality of pores 11. A ratio t/V of a deposition time t of the silicon particles 20 to a pore volume V of the framework 10 may be controlled to satisfy 10 gh/cm³≤t/V≤500 gh/cm³.

In some embodiments, the silicon-source gas may be mixed with a carrier gas before being introduced into the framework 10 to deposit the silicon particles 20.

In some embodiments, the carrier gas may be, but is not limited to, at least one of nitrogen or argon.

In some embodiments, the deposition temperature T1 of the silicon particles 20 may be, but is not limited to, 400 °C, 430 °C, 450 °C, 480 °C, 500 °C, 530 °C, 550 °C, 580 °C, 600 °C, 630 °C, 650 °C, 680 °C, 700 °C, etc. In a case where the deposition temperature T1 of the silicon particles 20 is too high, the reaction rate of the silicon-source gas may be excessively fast, and the silicon-source gas may begin to deposit before entering the interiors of the pores 11 of the framework 10. Silicon deposited on the surface of the framework 10 is not spatially confined by the framework 10 when the silicon expands during lithium intercalation of the negative electrode active particle 100. In this case, the expansion rate of the entire negative electrode active particle 100 may be increased, and the cycle performance of the battery employing the negative electrode active particle 100 may be deteriorated. In a case where silicon is deposited on the surface of the framework 10, the size of silicon may not be constrained/limited by the sizes of the pores 11 inside the framework 10 and may continue to grow. An excessively large silicon size may lead to the formation of a Li₁₅Si₄ phase during lithium intercalation, such that the cycle performance of the battery employing the negative electrode active particle 100 may be further deteriorated. In a case where the deposition temperature T1 of the silicon particles 20 is too low, the silicon-source gas may be difficult to be decomposed into silicon for deposition, and the silicon particles 20 may be unable to be formed inside the pores 11 of the framework 10.

In some embodiments, the ratio t/V of the deposition time t of the silicon particles 20 to the pore volume V of the framework 10 may be, but is not limited to, 10 gh/cm³, 15 gh/cm³, 20 gh/cm³, 25 gh/cm³, 30 gh/cm³, 40 gh/cm³, 50 gh/cm³, 80 gh/cm³, 100 gh/cm³, 120 gh/cm³, 140 gh/cm³, 160 gh/cm³, 180 gh/cm³, 200 gh/cm³, 220 gh/cm³, 240 gh/cm³, 260 gh/cm³, 280 gh/cm³, 300 gh/cm³, 320 gh/cm³, 340 gh/cm³, 360 gh/cm³, 380 gh/cm³, 400 gh/cm³, 420 gh/cm³, 440 gh/cm³, 460 gh/cm³, 480 gh/cm³, 500 gh/cm³, etc. In a case where the ratio t/V of the deposition time t of the silicon particles 20 to the pore volume V of the framework 10 is too low, the deposition of the silicon particles 20 may tend to be non-uniform, and the silicon particles 20 may not be disposed in some of the pores 11 of the framework 10. In this case, the expansion rate of the negative electrode active particle 100 during lithium intercalation may be increased, and the cycle performance of the negative electrode active particle 100 may be affected. In a case where the ratio t/V of the deposition time t of the silicon particles 20 to the pore volume V of the framework 10 is too high, the preparation cost of the negative electrode active particle 100 may be increased. In a case where the ratio t/V of the deposition time t of the silicon particles 20 to the pore volume V of the framework 10 satisfies 10 gh/cm³≤t/V≤500 gh/cm³, the silicon particles 20 may be deposited more uniformly in the pores 11 of the framework 10, such that the silicon particles 20 may be deposited in as many of the pores 11 as possible. In this way, the expansion rate of the negative electrode active particle 100 during lithium intercalation may be better reduced. The negative electrode active particle 100 may also have a relatively low preparation cost.

In some embodiments, the ratio t/V of the deposition time t of the silicon particles 20 to the pore volume V of the framework 10 may satisfy 10 gh/cm³≤t/V≤400 gh/cm³. In this way, the silicon particles 20 may be deposited more uniformly in the pores 11 of the framework 10, such that the silicon particles 20 may be deposited in as many of the pores 11 as possible. As a result, the expansion rate of the negative electrode active particle 100 during lithium intercalation may be better reduced, and the negative electrode active particle 100 may also have a relatively low preparation cost.

In some embodiments, the ratio t/V of the deposition time t of the silicon particles 20 to the pore volume V of the framework 10 may satisfy 10 gh/cm³≤t/V≤300 gh/cm³. In this way, the silicon particles 20 may be deposited more uniformly in the pores 11 of the framework 10, such that the silicon particles 20 may be deposited in as many of the pores 11 as possible. As a result, the expansion rate of the negative electrode active particle 100 during lithium intercalation may be better reduced, and the negative electrode active particle 100 may also have a relatively low preparation cost.

In some embodiments, the ratio t/V of the deposition time t of the silicon particles 20 to the pore volume V of the framework 10 may satisfy 10 gh/cm³≤t/V≤200 gh/cm³. In this way, the silicon particles 20 may be deposited more uniformly in the pores 11 of the framework 10, such that the silicon particles 20 may be deposited in as many of the pores 11 as possible. As a result, the expansion rate of the negative electrode active particle 100 during lithium intercalation may be better reduced, and the negative electrode active particle 100 may also have a relatively low preparation cost.

In some embodiments, the ratio t/V of the deposition time t of the silicon particles 20 to the pore volume V of the framework 10 may satisfy 10 gh/cm³≤t/V≤100 gh/cm³. In this way, the silicon particles 20 may be deposited more uniformly in the pores 11 of the framework 10, such that the silicon particles 20 may be deposited in as many of the pores 11 as possible. As a result, the expansion rate of the negative electrode active particle 100 during lithium intercalation may be better reduced, and the negative electrode active particle 100 may also have a relatively low preparation cost.

In some embodiments, the deposition time t of the silicon particles 20 may satisfy 1 h≤t≤100 h. In some embodiments, the deposition time t of the silicon particles 20 may be, but is not limited to, 1 h, 3 h, 5 h, 8 h, 10 h, 15 h, 20 h, 25 h, 30 h, 35 h, 40 h, 50 h, 60 h, 70 h, 80 h, 90 h, 100 h, etc. In a case where the deposition time t of the silicon particles 20 is too long, the growth of the silicon particles 20 may tend to be excessive, resulting in excessively large silicon particles 20 and an excessively large size of the silicon phase in the negative electrode active particle 100. In this case, the negative electrode active particle 100 may be more prone to form a Li₁₅Si₄ crystalline phase during lithium intercalation. During the formation of the crystalline phase, the negative electrode active particle 100 may experience higher internal stress and greater volume change, such that the cycle performance of the negative electrode active particle 100 may be deteriorated. In a case where the deposition time t of the silicon particles 20 is too short, the content of the silicon in the negative electrode active particle 100 may be reduced, and the specific capacity of the negative electrode active particle 100 may be reduced.

In some embodiments, the pore volume V of the framework 10 may be in a range from 0.2 cm³/g to 1.5 cm³/g. In some embodiments, the pore volume V of the framework 10 may be, but is not limited to, 0.2 cm³/g, 0.3 cm³/g, 0.4 cm³/g, 0.5 cm³/g, 0.6 cm³/g, 0.7 cm³/g, 0.8 cm³/g, 0.9 cm³/g, 1.0 cm³/g, 1.1 cm³/g, 1.2 cm³/g, 1.3 cm³/g, 1.4 cm³/g, 1.5 cm³/g, etc. In a case where the pore volume of the framework 10 is too small, the framework 10 may be unable to deposit or accommodate deposition of a sufficient amount of the silicon particles 20. In this case, the gravimetric capacity of the negative electrode active particle 100 may be reduced. In a case where the pore volume of the framework 10 is too large, an excessive number of pores 11 may reduce the energy density of the negative electrode active particle 100. The proportion of the framework 10 may be relatively low, and the framework 10 may be prone to fracture, thereby reducing the cycle performance of the negative electrode active particle 100.

In some embodiments, a ratio m/V' of a mass m of the silicon-source gas to a total volume V' of the plurality of pores 11 of the framework 10 may satisfy 0.05 g/cm³≤m/V'≤1.8 g/cm³.

It should be noted that "a total volume V' of the plurality of pores 11 of the framework 10" may refer to the sum of the volumes of all of the pores 11 of all of the frameworks 10 in the reaction system.

For example, the total volume V' of the plurality of pores 11 of the framework 10 = a mass m' of the framework 10 participating in the reaction × the pore volume V of the framework 10. That is, V' = m'V.

In some embodiments, the ratio m/V' of the mass m of the silicon-source gas to the total volume V' of the plurality of pores 11 of the framework 10 may be, but is not limited to, 0.05 g/cm³, 0.08 g/cm³, 0.1 g/cm³, 0.15 g/cm³, 0.2 g/cm³, 0.25 g/cm³, 0.3 g/cm³, 0.4 g/cm³, 0.5 g/cm³, 0.6 g/cm³, 0.8 g/cm³, 1.0 g/cm³, 1.2 g/cm³, 1.4 /cm³, 1.6 g/cm³, 1.8 g/cm³, etc. In a case where the ratio m/V' of the mass m of the silicon-source gas to the total volume V' of the plurality of pores 11 of the framework 10 is too low, the energy density of the obtained negative electrode active particle 100 may be excessively low. In a case where the ratio m/V' of the mass m of the silicon-source gas to the total volume V' of the plurality of pores 11 of the framework 10 is too high, the mass fraction of silicon of the obtained negative electrode active particle 100 may be excessively high, such that the expansion rate of the negative electrode active particle 100 may be increased. During lithium intercalation of the negative electrode active particle 100, the framework 10 may be unable to support the expansion of the silicon particles 20. In this case, the negative electrode active particle 100 may be prone to fracture, thereby affecting the cycle performance of the battery employing the negative electrode active particle 100. In a case where the ratio m/V' of the mass m of the silicon-source gas to the total volume V' of the plurality of pores 11 of the framework 10 satisfies 0.05 g/cm³≤m/V'≤1.8 g/cm³, the negative electrode active particle 100 may exhibit a relatively high energy density while also exhibiting a relatively low expansion rate. In this way, the battery employing the negative electrode active particle 100 may be provided a relatively good cycle performance.

In some embodiments, the ratio m/V' of the mass m of the silicon-source gas to the total volume V' of the plurality of pores 11 of the framework 10 may satisfy 0.2 g/cm³≤m/V'≤1.8 g/cm³. In this way, the negative electrode active particle 100 may exhibit a relatively high energy density while also exhibiting a relatively low expansion rate, such that the battery employing the negative electrode active particle 100 may be provided a relatively good cycle performance.

In some embodiments, the ratio m/V' of the mass m of the silicon-source gas to the total volume V' of the plurality of pores 11 of the framework 10 may satisfy 0.5 g/cm³≤m/V'≤1.8 g/cm³. In this way, the negative electrode active particle 100 may exhibit a relatively high energy density while also exhibiting a relatively low expansion rate, such that the battery employing the negative electrode active particle 100 may be provided a relatively good cycle performance.

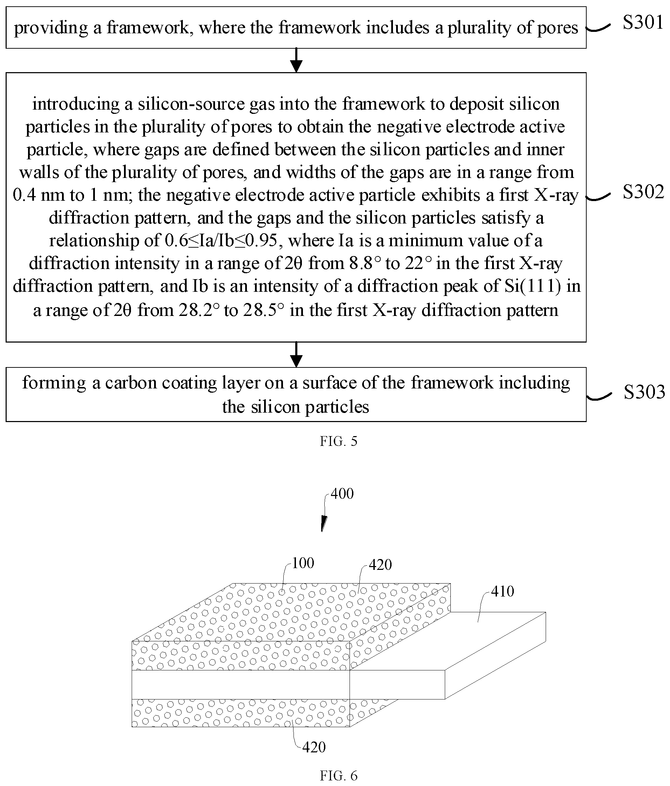

As shown in FIG. 5, some embodiments of the present disclosure further provide a preparation method for a negative electrode active particle 100. The preparation method may include operations S301 to S303.

At the operation S301, a framework 10 may be provided. The framework 10 may include a plurality of pores 11.

At the operation S302, a silicon-source gas may be introduced into the framework 10 to deposit silicon particles 20 in the plurality of pores 11 to obtain the negative electrode active particle 100. Gaps 30 may be defined between the silicon particles 20 and inner walls of the plurality of pores 11. Widths of the gaps 30 may be in a range from 0.4 nm to 1 nm. The negative electrode active particle 100 may exhibit a first X-ray diffraction pattern. The gaps 30 and the silicon particles 20 may satisfy a relationship of 0.6≤Ia/Ib≤0.95, where Ia is a minimum value of a diffraction intensity in a range of 2θ from 8.8° to 22° in the first X-ray diffraction pattern, and Ib is an intensity of a diffraction peak of Si(111) in a range of 2θ from 28.2° to 28.5° in the first X-ray diffraction pattern.

For detailed descriptions of the operations S301 and S302, reference may be made to the corresponding parts of the foregoing embodiments, and details are not repeated herein.

At the operation S303, a carbon coating layer 40 may be formed on a surface of the framework 10 including the silicon particles 20.

In some embodiments, an organic gas may be introduced into the framework 10 including the silicon particles 20, and chemical vapor deposition (i.e., carbon deposition) may be performed at a temperature in a range from 500 °C to 900 °C to form the carbon coating layer 40 on the surface of the framework 10 including the silicon particles 20.

In some embodiments, the organic gas may be, but is not limited to, at least one of acetylene or methane, etc.

In some embodiments, the deposition temperature may be, but is not limited to, 500 °C, 550 °C, 600 °C, 650 °C, 700 °C, 750 °C, 800 °C, 850 °C, 900 °C, etc. The time for chemical vapor deposition may be in a range from 1 h to 3 h. For example, the time for chemical vapor deposition may be 1 h, 1.5 h, 2 h, 2.5 h, 3 h, etc.

As shown in FIG. 6, some embodiments of the present disclosure further provide a negative electrode plate 400. The negative electrode plate 400 may include a negative electrode current collector 410 and a negative electrode active layer 420. The negative electrode active layer 420 may be disposed on a surface of the negative electrode current collector 410. The negative electrode active layer 420 may include the negative electrode active particle 100 according to some embodiments of the present disclosure or a negative electrode active particle 100 prepared by the preparation method for the negative electrode active particle 100 according to some embodiments of the present disclosure.

In some embodiments, the negative electrode active layer 420 may be disposed on one surface or a plurality of surfaces of the negative electrode current collector 410.

In some embodiments, the negative electrode current collector 410 may be, but is not limited to, a copper foil.

In some embodiments, the negative electrode active layer 420 may further include a negative electrode conductive agent and a negative electrode binder. It will be understood that the negative electrode active particle 100, the negative electrode conductive agent, and the negative electrode binder may be uniformly dispersed.

In some embodiments, the negative electrode conductive agent may be, but is not limited to, conductive carbon black (referred to as "SP"), acetylene black, carbon nanotubes, carbon fibers, or graphite.

In some embodiments, the negative electrode binder may be, but is not limited to, at least one of polyacrylic acid (PAA), polyvinylidene fluoride (PVDF), polyamide (PA), polyacrylonitrile (PAN), polyacrylate, polyvinylether, polymethyl methacrylate (PMMA), polyhexafluoropropylene, or polymerized styrene butadiene rubber (SBR), etc.

In some embodiments, in the negative electrode active layer 420, a mass fraction of the negative electrode binder may be in a range from 2 wt% to 4 wt%. In some embodiments, in the negative electrode active layer 420, the mass fraction of the negative electrode binder may be, but is not limited to, 2 wt%, 2.5 wt%, 3 wt%, 3.5 wt%, 4 wt%, etc. In a case where the mass fraction of the negative electrode binder is too low, the negative electrode active layer 420 may tend to pulverize or shed. In a case where the mass fraction of the negative electrode binder is too high, the energy density of the negative electrode plate 400 may be reduced.

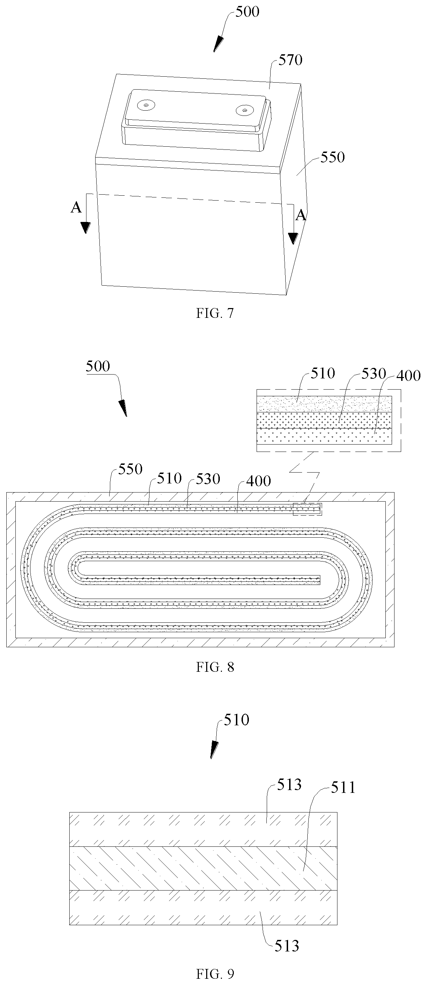

As shown in FIGS. 7 and 8, some embodiments of the present disclosure further provide a battery 500. The battery 500 may include an electrolyte, a positive electrode plate 510, a separator 530, and the negative electrode plate 400 according to some embodiments of the present disclosure. The positive electrode plate 510 may be at least partially immersed in the electrolyte. The separator 530 may be located on a side of the positive electrode plate 510 and be at least partially immersed in the electrolyte. The negative electrode plate 400 may be disposed on a side of the separator 530 facing away from the positive electrode plate 510 and be at least partially immersed in the electrolyte.

It will be understood that the positive electrode plate 510, the separator 530, and the negative electrode plate 400 may be stacked in sequence.

The battery 500 according to some embodiments of the present disclosure may be, but is not limited to, a lithium-ion secondary battery 500, a lithium-ion primary battery 500, a lithium-sulfur battery 500, a sodium-lithium-ion battery 500, a sodium-ion battery 500, or a magnesium-ion battery 500, etc.

As shown in FIG. 9, in some embodiments, the positive electrode plate 510 may include a positive electrode current collector 511 and a positive electrode active layer 513 covering a surface of the positive electrode current collector 511. It will be understood that the positive electrode active layer 513 may cover one surface or two opposite surfaces of the positive electrode current collector 511.

In some embodiments, the positive electrode current collector 511 may be, but is not limited to, an aluminum foil.

In some embodiments, the positive electrode active layer 513 may include a positive electrode active material, a positive electrode conductive agent, and a positive electrode binder.

In some embodiments, the positive electrode active material may be, but is not limited to, at least one of lithium iron phosphate or lithium cobalt oxide, etc.

In some embodiments, the positive electrode conductive agent may be, but is not limited to, at least one of conductive carbon black, acetylene black, carbon nanotubes, carbon fibers, or graphene, etc.

In some embodiments, the positive electrode binder may be, but is not limited to, at least one of polyvinylidene fluoride (PVDF), polyamide (PA), polyacrylonitrile (PAN), polyacrylate, polyvinylether, polymethyl methacrylate (PMMA), polyhexafluoropropylene, or polymerized styrene butadiene rubber (SBR), etc.

In some embodiments, in the positive electrode active layer 513, a mass fraction of the positive electrode binder may be in a range from 2 wt% to 4 wt%. In some embodiments, in the positive electrode active layer 513, the mass fraction of the positive electrode binder may be, but is not limited to, 2 wt%, 2.5 wt%, 3 wt%, 3.5 wt%, 4 wt%, etc. In a case where the mass fraction of the positive electrode binder is too low, the positive electrode active layer 513 may tend to pulverize or shed. In a case where the mass fraction of the positive electrode binder is too high, the energy density of the positive electrode plate 510 may be reduced.

In some embodiments, the electrolyte may include an electrolyte salt, an organic solvent, and a film-forming additive.

In some embodiments, the electrolyte salt may be a lithium salt. The lithium salt may include, but is not limited to, at least one of lithium hexafluorophosphate (LiPF₆), lithium tetrafluoroborate (LiBF₄), lithium bis(fluorosulfonyl)imide (LiFSI), lithium bis(trifluoromethanesulfonyl)imide (LiTFSI), lithium bis(oxalato)borate (LiBOB), lithium difluorobis(oxalato)phosphate (LiODFP), lithium difluoro(oxalato)borate (LiODFB), lithium difluorophosphate (LiPO₂F₂), or lithium trifluoromethanesulfonate (CF₃SO₃Li), etc.

In some embodiments, in the electrolyte, a molar concentration M of the lithium salt may satisfy 0.7 mol/L≤M≤1.4 mol/L. In the electrolyte, the molar concentration M of the lithium salt may be, but is not limited to, 0.7 mol/L, 0.8 mol/L, 0.9 mol/L, 1.0 mol/L, 1.1 mol/L, 1.2 mol/L, 1.3 mol/L, 1.4 mol/L, etc. In a case where the molar concentration M of the lithium salt in the electrolyte is too low, the concentration of free ions in the electrolyte may be excessively low. In this case, the electrical conductivity of the electrolyte may be reduced, such that the kinetic performance of the battery may be reduced. In a case where the molar concentration M of the lithium salt in the electrolyte is too high, a portion of the electrolyte salt may remain undissociated, and the viscosity of the electrolyte may be increased. In this case, the electrical conductivity of the electrolyte may be reduced, and the kinetic performance of the battery may also be reduced. In a case where the molar concentration M of the lithium salt in the electrolyte satisfies 0.7 mol/L≤M≤1.4 mol/L, the electrolyte may exhibit a relatively high electrical conductivity, such that the battery may exhibit relatively good kinetic performance.

In some embodiments, the organic solvent may include at least one of a cyclic carbonate or a chain carbonate. The cyclic carbonate may have a high dielectric constant and high ionic conductivity. The cyclic carbonate may form a stable SEI film on the surface of the negative electrode plate 400. However, the cyclic carbonate may have a relatively high viscosity. The chain carbonate may have a viscosity lower than the cyclic carbonate and an electrochemical stability better the cyclic carbonate. The chain carbonate may improve the low-temperature performance of the electrolyte. Therefore, in a case where a mixed solvent of the cyclic carbonate and the chain carbonate is used or adopted, the electrolyte may exhibit a suitable viscosity and suitable low-temperature stability, and the battery 500 using the electrolyte may achieve better film formation.

In some embodiments, the cyclic carbonate may include, but is not limited to, at least one of ethylene carbonate (EC) or propylene carbonate (PC), etc. The dielectric constant of the ethylene carbonate may be much greater than the dielectric constant of the propylene carbonate. The ethylene carbonate may better promote the formation of the SEI film.

In some embodiments, the chain carbonate may include, but is not limited to, at least one of dimethyl carbonate (DMC), diethyl carbonate (DEC), or ethyl methyl carbonate (EMC), etc.

In some embodiments, the organic solvent may include at least one of a cyclic carbonate or a chain carbonate. The cyclic carbonate may have a high dielectric constant and high ionic conductivity. The cyclic carbonate may form a stable SEI film on the surface of the negative electrode plate 400. However, the cyclic carbonate may have a relatively high viscosity. The chain carbonate may have a viscosity lower than the cyclic carbonate and an electrochemical stability better the cyclic carbonate. The chain carbonate may improve the low-temperature performance of the electrolyte. Therefore, in a case where a mixed solvent of the cyclic carbonate and the chain carbonate is used or adopted, the electrolyte may exhibit a suitable viscosity and suitable low-temperature stability, and the battery 500 using the electrolyte may achieve better film formation.

In some embodiments, the cyclic carbonate may include, but is not limited to, at least one of ethylene carbonate (EC) or propylene carbonate (PC), etc. The dielectric constant of the ethylene carbonate may be much greater than the dielectric constant of the propylene carbonate. The ethylene carbonate may better promote the formation of the SEI film.

In some embodiments, the chain carbonate may include, but is not limited to, at least one of dimethyl carbonate (DMC), diethyl carbonate (DEC), or ethyl methyl carbonate (EMC), etc.

In some embodiments, the film-forming additive may include at least one of fluoroethylene carbonate (FEC), ethylene sulfate (PST), vinylene carbonate (VC), vinyl ethylene carbonate (VEC), tris(trimethylsilyl) phosphate, tris(trimethylsilyl) borate, adiponitrile, succinonitrile, or 1,3,6-hexanetricarbonitrile.

In some embodiments, a mass fraction of the film-forming additive may be in a range from 1.5% to 3%. In some embodiments, the mass fraction of the film-forming additive may be, but is not limited to, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, etc. The film-forming additive may be configured to promote the formation of an interfacial film on at least one of the positive electrode plate 510 or the negative electrode plate 400 and maintain the stability of the interfacial film.

In some embodiments, the separator 530 may be, but is not limited to, at least one of a polypropylene (PP) film, a polyethylene (PE) film, or a ceramic film, etc. In some embodiments, a thickness of the separator 530 may be in a range from 14 µm to 18 µm. In some embodiments, the thickness of the separator 530 may be, but is not limited to, 14 µm, 14.5 µm, 15 µm, 15.5 µm, 16 µm, 16.5 µm, 17 µm, 17.5 µm, 18 µm, etc.

In some embodiments, the battery 500 may further include a housing 550 and an end cap assembly 570 (also referred to as "end cover assembly"). The housing 550 and the end cap assembly 570 may cooperatively define an accommodation space. The accommodation space may be configured to accommodate the electrolyte, the positive electrode plate 510, the separator 530, and the negative electrode plate 400. The end cap assembly 570 may include a positive electrode terminal (not shown in the figures) and a negative electrode terminal (not shown in the figures). The positive electrode terminal may be electrically connected to the positive electrode plate 510. The negative electrode terminal may be electrically connected to the negative electrode plate 400. The positive electrode terminal and the negative electrode terminal may be configured to electrically connect the battery 500 to an electrical device or to another battery 500.

It will be understood that the battery 500 described in some embodiments is merely one form of a battery 500 to which the negative electrode plate 400 is applied, and should not be construed as limiting the battery 500 provided in the present disclosure, nor should it be construed as limiting the negative electrode plate 400 provided in the various embodiments of the present disclosure.

As measured, a cycle capacity retention rate of the battery 500 prepared using the negative electrode active particle 100 according to some embodiments of the present disclosure after 400 cycles at 25 °C may be greater than or equal to 92.2%. In some embodiments, the cycle capacity retention rate of the battery 500 prepared using the negative electrode active particle 100 according to some embodiments of the present disclosure after 400 cycles at 25°C may be, but is not limited to, greater than or equal to 92.2%, greater than or equal to 93%, greater than or equal to 94%, greater than or equal to 95%, greater than or equal to 96%, greater than or equal to 97%, greater than or equal to 98%, greater than or equal to 99%, etc.

As measured, a thickness expansion rate of the battery 500 prepared using the negative electrode active particle 100 according to some embodiments of the present disclosure after 400 cycles at 25 °C may be less than or equal to 5.4%. In some embodiments, the thickness expansion rate of the battery 500 prepared using the negative electrode active particle 100 according to some embodiments of the present disclosure after 400 cycles at 25 °C may be, but is not limited to, less than or equal to 5.4%, less than or equal to 5%, less than or equal to 4.5%, less than or equal to 4%, less than or equal to 3.5%, less than or equal to 3%, less than or equal to 2.5%, less than or equal to 2%, etc.

The negative electrode active particle 100 and the battery 500 of the present disclosure will be further described below through some examples.

### Example 1

The negative electrode active particle 100 of the Example 1 was prepared by the following operations.
1) 1000g of porous carbon (the framework 10) was placed into a chemical vapor deposition furnace. The average pore size of the plurality of pores 11 was 1.8 nm. The pore volume V of the framework 10 was 0.8 cm³/g.
2) Nitrogen gas was introduced and the temperature was raised to 500 °C. After that, a mixed gas of silane (silicon-source gas) and nitrogen (carrier gas) was then introduced and reacted for 20 h. The total mass of the silane introduced was 1000 g.
3) The temperature was raised to 650 °C. Acetylene gas (organic gas) was introduced and reacted for 2 h. The negative electrode active particle 100 was obtained after cooling.

### Example 2

The negative electrode active particle 100 of the Example 2 was prepared by the following operations.
1) 1000g of porous carbon (the framework 10) was placed into the chemical vapor deposition furnace. The average pore size of the plurality of pores 11 was 1.8 nm. The pore volume V of the framework 10 was 1.0 cm³/g.
2) Nitrogen gas was introduced and the temperature was raised to 500 °C. After that, a mixed gas of silane (silicon-source gas) and nitrogen (carrier gas) was then introduced and reacted for 30 h. The total mass of the silane introduced was 1000 g.
3) The temperature was raised to 650 °C. Acetylene gas (organic gas) was introduced and reacted for 3 h. The negative electrode active particle 100 was obtained after cooling.

### Example 3

The negative electrode active particle 100 of the Example 3 was prepared by the following operations.
1) 1000g of porous carbon (the framework 10) was placed into the chemical vapor deposition furnace. The average pore size of the plurality of pores 11 was 1.8 nm. The pore volume V of the framework 10 was 0.8 cm³/g.
2) Nitrogen gas was introduced and the temperature was raised to 500 °C. After that, a mixed gas of silane (silicon-source gas) and nitrogen (carrier gas) was then introduced and reacted for 20 h. The total mass of the silane introduced was 800 g.
3) The temperature was raised to 650 °C. Acetylene gas (organic gas) was introduced and reacted for 3 h. The negative electrode active particle 100 was obtained after cooling.

### Example 4

The negative electrode active particle 100 of the Example 4 was prepared by the following operations.
1) 1000g of porous carbon (the framework 10) was placed into the chemical vapor deposition furnace. The average pore size of the plurality of pores 11 was 3.2 nm. The pore volume V of the framework 10 was 1.2 cm³/g.
2) Nitrogen gas was introduced and the temperature was raised to 500 °C. After that, a mixed gas of silane (silicon-source gas) and nitrogen (carrier gas) was then introduced and reacted for 18 h. The total mass of the silane introduced was 1000 g.
3) The temperature was raised to 650 °C. Acetylene gas (organic gas) was introduced and reacted for 3 h. The negative electrode active particle 100 was obtained after cooling.

### Example 5

The negative electrode active particle 100 of the Example 5 was prepared by the following operations.
1) 1000g of porous TiC (the framework 10) was placed into the chemical vapor deposition furnace. The average pore size of the plurality of pores 11 was 1.6 nm. The pore volume V of the framework 10 was 0.8 cm³/g.
2) Nitrogen gas was introduced and the temperature was raised to 500 °C. After that, a mixed gas of silane (silicon-source gas) and nitrogen (carrier gas) was then introduced and reacted for 20 h. The total mass of the silane introduced was 1000 g.
3) The temperature was raised to 650 °C. Acetylene gas (organic gas) was introduced and reacted for 2 h. The negative electrode active particle 100 was obtained after cooling.

### Comparative Example 1

The negative electrode active particle 100 of the Comparative Example 1 was prepared by the following operations.
1) 1000g of porous carbon (the framework 10) was placed into the chemical vapor deposition furnace. The average pore size of the plurality of pores 11 was 1.8 nm. The pore volume V of the framework 10 was 0.8 cm³/g.
2) Nitrogen gas was introduced and the temperature was raised to 500 °C. After that, a mixed gas of silane (silicon-source gas) and nitrogen (carrier gas) was then introduced and reacted for 6 h. The total mass of the silane introduced was 1000 g.
3) The temperature was raised to 650 °C. Acetylene gas (organic gas) was introduced and reacted for 2 h. The negative electrode active particle 100 was obtained after cooling.

### Comparative Example 2

The negative electrode active particle 100 of the Comparative Example 2 was prepared by the following operations.
1) 1000g of porous carbon (the framework 10) was placed into the chemical vapor deposition furnace. The average pore size of the plurality of pores 11 was 1.8 nm. The pore volume V of the framework 10 was 0.8 cm³/g.
2) Nitrogen gas was introduced and the temperature 1.2 was raised to 500 °C. After that, a mixed gas of silane (silicon-source gas) and nitrogen (carrier gas) was then introduced and reacted for 20 h. The total mass of the silane introduced was 1500 g.
3) The temperature was raised to 650 °C. Acetylene gas (organic gas) was introduced and reacted for 2 h. The negative electrode active particle 100 was obtained after cooling.

### Comparative Example 3

The negative electrode active particle 100 of the Comparative Example 3 was prepared by the following operations.
1) 1000g of porous carbon (the framework 10) was placed into the chemical vapor deposition furnace. The average pore size of the plurality of pores 11 was 5 nm. The pore volume V of the framework 10 was 1.3 cm³/g.
2) Nitrogen gas was introduced and the temperature was raised to 500 °C. After that, a mixed gas of silane (silicon-source gas) and nitrogen (carrier gas) was then introduced and reacted for 20 h. The total mass of the silane introduced was 2000 g.
3) The temperature was raised to 650 °C. Acetylene gas (organic gas) was introduced and reacted for 2 h. The negative electrode active particle 100 was obtained after cooling.

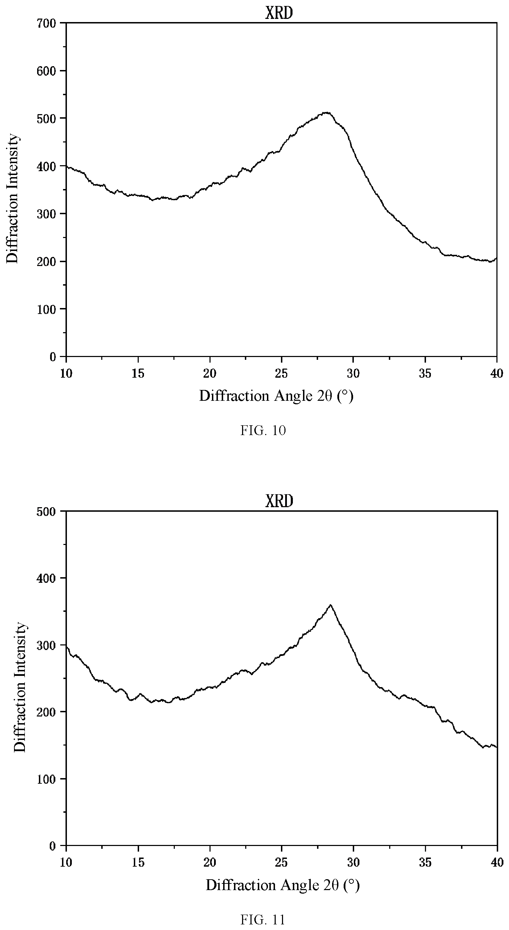

The negative electrode active particles 100 obtained in Examples 1 to 5 and Comparative Examples 1 to 3 were subjected to the following tests.
1) X-ray powder diffraction (XRD) tests were performed on the negative electrode active particles 100 of the forgoing Examples and Comparative Examples using CuKα radiation with a wavelength of 0.154 nm, to obtain first X-ray diffraction patterns of the forgoing Examples and Comparative Examples. Ia and Ib were obtained from the first X-ray diffraction patterns, and Ia/Ib values were calculated. The Ia/Ib values of the forgoing Examples and Comparative Examples are shown in Table 1 below. The first X-ray diffraction pattern of the negative electrode active particles 100 of Example 1 is shown in FIG. 10.
2) The negative electrode active particles 100 of the forgoing Examples and Comparative Examples were heated to 700 °C under an inert atmosphere (e.g., N₂, Ar, vacuum, etc.) and held at 700°C for 2 h, followed by cooling to room temperature. XRD tests were then performed using CuKα radiation with a wavelength of 0.154 nm, to obtain second X-ray diffraction patterns of the forgoing Examples and Comparative Examples. Ia and Ib were obtained from the second X-ray diffraction patterns, and Ic/Id values were calculated. The Ic/Id values of the forgoing Examples and Comparative Examples are shown in Table 1 below. The average particle size D1 of the silicon particles 20 was determined from the full width at half maximum (FWHM) of the diffraction peak of the Si(111) near 2θ = 28.4° in the second X-ray diffraction pattern, using the Scherrer equation D1 = 7.852/(FWHM*cosθ). The Ic/Id and D1 values of the forgoing Examples and Comparative Examples are shown in Table 1 below. The second X-ray diffraction pattern of the negative electrode active particles 100 of the Example 1 is shown in FIG. 11.
3) Preparation of coin-type half-cell 500: the negative electrode active particles 100, conductive carbon black (referred to as "SP"), carbon nanotube (CNT), and polyacrylic acid (PAA) were mixed in a mass ratio of 80:8:2:10 to prepare a slurry. The slurry was coated onto a copper foil (i.e., negative electrode current collector), and subjected to vacuum drying and roll pressing to obtain a negative electrode plate. The negative electrode plate was assembled into the coin-type half-cell 500, with a lithium foil serving as a counter electrode.
4) Capacity grading and cycling tests of the coin-type half-cell 500: the coin-type half-cell 500 was discharged to 5 mV at a rate of 0.1 C, allowed to stand for 5 min, then discharged to 5 mV at a rate of 0.05 C, allowed to stand for 5 min, then discharged to 5 mV at a rate of 0.02 C, allowed to stand for 10 min, and then charged at a rate of 0.1 C to 1.5 V. The coin-type half-cell 500 was subjected to 50 cycles, and the cycle capacity retention rate after 50 cycles was calculated. The 50-cycle capacity retention rates of the coin-type half-cells 500 including the negative electrode active particles 100 of the forging Examples and Comparative Examples are shown in Table 2 below.
5) The negative electrode active particles 100, graphite, PAA, and CNT were mixed in a mass ratio of 10:87:2.8:0.2 to form a slurry. The slurry was then coated onto the negative electrode current collector, dried at 100°C, and roll-pressed under a pressure of 5 t to obtain a negative electrode plate. Lithium cobalt oxide (serving as a positive electrode active material) was mixed with conductive carbon black (conductive agent) and PVDF binder in a mass ratio of 98:1:1 to form a slurry. The slurry was then coated onto the positive electrode current collector, followed by drying and roll pressing to obtain a positive electrode plate. The negative electrode plate, the positive electrode plate, and the separator were assembled into a wound battery 500. The wound battery 500 was then subjected to aluminum-plastic film packaging, drying, electrolyte injection, formation, secondary packaging, and capacity grading processes to obtain the battery 500. The battery 500 was then subjected to a cycle test at 25 °C. The cycle capacity retention rates and thickness expansion rates of the batteries 500 including the negative electrode active particles 100 of the forgoing Examples and Comparative Examples after 400 cycles are shown in Table 3 below.
6) Calculation of the thickness expansion rates of the battery 500: Thickness expansion rate of battery 500 = (Thickness of battery 500 after n cycles - Initial thickness of battery 500) / Initial thickness of battery 500 × 100%.

The measurement results of the forgoing Examples and Comparative Examples are shown in Tables 1, 2, and 3 below.

**Table 1**

| Example | Specific surface area of negative electrode active particle 100 (m²/g) | Ia/Ib | Ic/Id | Average particle size D1 of silicon particles 20(nm) |
|---|---|---|---|---|
| Example 1 | 2.6 | 0.64 | 0.59 | 1.62 |
| Example 2 | 1.8 | 0.73 | 0.69 | 1.14 |
| Example 3 | 3.5 | 0.69 | 0.66 | 1.37 |
| Example 4 | 2.3 | 0.61 | 0.54 | 1.99 |
| Example 5 | 3.1 | 0.65 | 0.61 | 1.53 |
| Comparative Example 1 | 5.7 | 0.52 | 0.36 | 2.57 |
| Comparative Example 2 | 2.9 | 0.37 | 0.29 | 5.25 |
| Comparative Example 3 | 7.3 | 0.39 | 0.30 | 6.41 |

**Table 2**

| Example | First-cycle lithium intercalation specific capacity (mAh/g) | First-cycle lithium deintercalation specific capacity (mAh/g) | Capacity retention rate after 50 cycles |
|---|---|---|---|
| Example 1 | 1898 | 1757 | 96.7% |
| Example 2 | 1876 | 1723 | 98.4% |
| Example 3 | 1784 | 1620 | 98.2% |
| Example 4 | 1913 | 1786 | 95.8% |
| Example 5 | 1873 | 1734 | 97.4% |
| Comparative Example 1 | 1885 | 1743 | 90.6% |
| Comparative Example 2 | 2146 | 1978 | 85.3% |
| Comparative Example 3 | 2325 | 2189 | 83.9% |

**Table 3**

| Example | Capacity retention rate after 400 cycles | Thickness expansion rate of battery after 400 cycles |
|---|---|---|
| Example 1 | 92.8% | 5.2% |
| Example 2 | 96.2% | 3.1% |
| Example 3 | 95.7% | 3.7% |
| Example 4 | 92.2% | 5.4% |
| Example 5 | 94.1% | 4.5% |
| Comparative Example 1 | 88.1% | 7.4% |
| Comparative Example 2 | 86.3% | 8.1% |
| Comparative Example 3 | 84.7% | 8.9% |

According to the test data of the Examples 1 to 5, it can be seen that the Ia/Ib values of the negative electrode active particles 100 of the Examples 1 to 5 are all in the range of 0.6 to 0.95. The coin-type half-cells 500 prepared using the negative electrode active particles 100 of the Examples all exhibit relatively high cycle capacity retention rates, and the capacity retention rates thereof are all greater than 95.8%. The negative electrode active particles 100 of the Examples exhibit relatively high specific capacities. The first-cycle lithium intercalation specific capacities of the negative electrode active particles 100 of the Examples are all greater than or equal to 1784 mAh/g. The first-cycle lithium deintercalation specific capacities of the negative electrode active particles 100 of the Examples are all greater than or equal to 1620 mAh/g. This indicates that the negative electrode active particles 100 of the present disclosure exhibit relatively high lithium intercalation specific capacities, and these specific capacities have relatively high reversibility (i.e., relatively high lithium deintercalation specific capacities). According to the test data of the Comparative Examples 1 to 3, it can be seen that, in a case where Ia/Ib of the negative electrode active particle 100 is less than 0.6, the cycle capacity retention rate of the coin-type half-cell 500 prepared using the negative electrode active particle 100 may be significantly reduced. This indicates that, in a case where Ia/Ib of the negative electrode active particle 100 is in the range of 0.6 to 0.95, the negative electrode active particle 100 may exhibit a higher cycle capacity retention rate while maintaining a relatively high specific capacity.

According to the test data of the Examples 1 to 5, it can be seen that the Ic/Id values of the negative electrode active particles 100 of the Examples 1 to 5 are all in the range of 0.5 to 0.95. The coin-type half-cells 500 prepared using the negative electrode active particles 100 of the Examples all exhibit relatively high cycle capacity retention rates, and the capacity retention rates thereof are all greater than 95.8%. The negative electrode active particles 100 of the Examples exhibit relatively high specific capacities. The first-cycle lithium intercalation specific capacities of the negative electrode active particles 100 of the Examples are all greater than or equal to 1784 mAh/g. The first-cycle lithium deintercalation specific capacities of the negative electrode active particles 100 of the Examples are all greater than or equal to 1620 mAh/g. According to the test data of the Comparative Examples 1 to 3, it can be seen that, in a case where Ic/Id of the negative electrode active particle 100 is less than 0.5, the cycle capacity retention rate of the coin-type half-cell 500 prepared using the negative electrode active particle 100 may be significantly reduced. This indicates that, in a case where Ic/Id of the negative electrode active particle 100 is in the range of 0.5 to 0.95, the negative electrode active particle 100 may exhibit a higher cycle capacity retention rate while maintaining a relatively high specific capacity.

According to the test data of the Examples 1 to 5, it can be seen that, in a case where the average particle sizes D1 of the silicon particles 20 of the negative electrode active particles 100 of the Examples 1 to 5 are in the range of 0.4 nm to 2 nm, the coin-type half-cells 500 prepared using the negative electrode active particles 100 all exhibit relatively high cycle capacity retention rates, and the cycle capacity retention rates are all greater than 95.8%. The negative electrode active particles 100 of the Examples exhibit relatively high specific capacities. The first-cycle lithium intercalation specific capacities of the negative electrode active particles 100 of the Examples are all greater than or equal to 1784 mAh/g. The first-cycle lithium deintercalation specific capacities of the negative electrode active particles 100 of the Examples are all greater than or equal to 1620 mAh/g. According to the test data of the Comparative Examples 1 to 3, it can be seen that, in a case where the average particle size D1 of the silicon particles 20 of the negative electrode active particle 100 is greater than 2 nm, the cycle capacity retention rate of the coin-type half-cell 500 prepared using the negative electrode active particle 100 may be significantly reduced. This indicates that, in a case where the average particle size D1 of the silicon particles 20 of the negative electrode active particle 100 is in the range of 0.4 nm to 2 nm, the negative electrode active particle 100 may exhibit a higher cycle capacity retention rate while maintaining a relatively high specific capacity.

As shown in Table 3, in a case where the Ia/Ib values of the negative electrode active particles 100 are in the range of 0.6 to 0.95, the batteries 500 using the negative electrode active particles 100 (i.e., the batteries 500 prepared using the negative electrode active particles 100 of the Examples 1 to 5) all exhibit relatively high cycle capacity retention rates after 400 cycles, and the cycle capacity retention rates are all greater than 92.2%. As Ia/Ib increases, the capacity retention rate of the battery 500 using the negative electrode active particles 100 after 400 cycles may gradually increase. In a case where Ia/Ib of the negative electrode active particles 100is less than 0.6 (e.g., the Comparative Examples 1 to 3), the capacity retention rate of the obtained battery 500 after 400 cycles may be significantly reduced.

As shown in Table 3, in a case where the Ia/Ib values of the negative electrode active particles 100 are in the range of 0.6 to 0.95, the thickness expansion rates of the batteries 500 using the negative electrode active particles 100 (i.e., the batteries 500 prepared using the negative electrode active particles 100 of the Examples 1 to 5) after 400 cycles are less than or equal to 5.4%. As Ia/Ib increases, the thickness expansion rate of the battery 500 using the negative electrode active particle 100 after 400 cycles may gradually decrease. In a case where Ia/Ib of the negative electrode active particle 100 is less than 0.6 (e.g., the Comparative Examples 1 to 3), the thickness expansion rate of the obtained battery 500 after 400 cycles may be significantly increased.

As shown in Table 3, in a case where the Ic/Id values of the negative electrode active particles 100 are in the range of 0.5 to 0.95, the batteries 500 using the negative electrode active particles 100 (i.e., the batteries 500 prepared using the negative electrode active particles 100 of the Examples 1 to 5) all exhibit relatively high cycle capacity retention rates after 400 cycles, and the cycle capacity retention rates are all greater than 92.2%. As Ic/Id increases, the capacity retention rate of the battery 500 using the negative electrode active particles 100 after 400 cycles may gradually increase. In a case where Ic/Id of the negative electrode active particle 100 is less than 0.5 (e.g., the Comparative Examples 1 to 3), the capacity retention rate of the obtained battery 500 after 400 cycles may be significantly reduced.

As shown in Table 3, in a case where the Ic/Id values of the negative electrode active particles 100 are in the range of 0.5 to 0.95, the thickness expansion rates of the batteries 500 using the negative electrode active particles 100 (i.e., the batteries 500 prepared using the negative electrode active particles 100 of the Examples 1 to 5) after 400 cycles are less than or equal to 5.4%. As Ic/Id increases, the thickness expansion rate of the battery 500 using the negative electrode active particle 100 after 400 cycles may gradually decrease. In a case where Ic/Id of the negative electrode active particle 100 is less than 0.5 (e.g., the Comparative Examples 1 to 3), the thickness expansion rate of the obtained battery 500 after 400 cycles may be significantly increased.

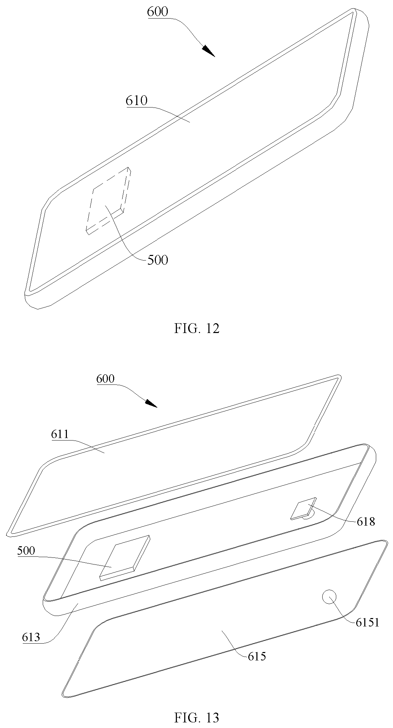

As shown in FIGS. 12 and 13, some embodiments of the present disclosure further provide an electronic device 600. The electronic device 600 may include a device body 610 and the battery 500 according to some embodiments of the present disclosure. The battery 500 may be configured to supply power to the device body 610.

The electronic device 600 according to some embodiments of the present disclosure may be, but is not limited to, a portable electronic device 600 such as a mobile phone, a tablet computer, a laptop computer, a desktop computer, a smart toy, smart glasses, a smart band, a smart watch, an electronic reader, a game console, or a toy, etc.

For detailed descriptions of the battery 500, reference may be made to the corresponding parts of the foregoing embodiments, and details are not repeated herein.

It will be understood that the electronic device 600 described in some embodiments is merely one form of an electronic device 600 to which the battery 500 is applied, and should not be construed as limiting the electronic device 600 provided in the present disclosure, nor should it be construed as limiting the battery 500 provided in the various embodiments of the present disclosure.

In some embodiments, the device body 610 may further include a display screen 611, a middle frame 613, and a housing 615. The housing 615 may be disposed opposite to the display screen 611. The middle frame 613 may be located between the display screen 611 and the housing 615. A side wall of the middle frame 613 may be exposed from the display screen 611 and the housing 615. The middle frame 613 and the housing 615 may cooperatively define an accommodation space. The accommodation space may be configured to accommodate the battery 500. The display screen 611 may be electrically connected to the battery 500. The battery 500 may be configured to supply power to the display screen 611.

In some embodiments, the display screen 611 may be, but is not limited to, one or more of a liquid crystal display screen, a light-emitting diode (LED) display screen, a micro light-emitting diode (Micro LED) display screen, a mini light-emitting diode (Mini LED) display screen, or an organic light-emitting diode (OLED) display screen, etc.

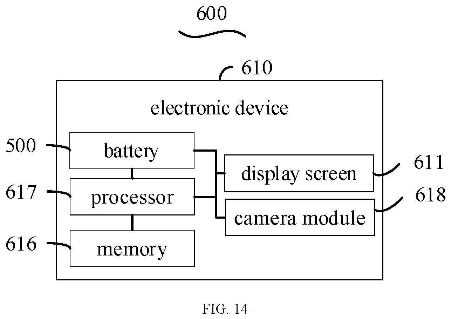

As shown in FIG. 14, in some embodiments, the device body 610 of the present disclosure may further include a processor 617 and a memory 616. The processor 617 and the memory 616 may be disposed in the accommodation space. The processor 617 may be electrically connected to the battery 500, the display screen 611, and the memory 616. The processor 617 may be configured to control the display screen 611 to display. The memory 616 may be configured to store a program code required for an operation of the processor 617, a program code required for controlling the display screen 611, a display content of the display screen 611, etc.

In some embodiments, the processor 617 may include one or more general processors. In some embodiments, the one or more general processors may be any type of device capable of processing electronic instructions. The one or more general processors may include a central processing unit (CPU), a microprocessor, a microcontroller, a main processor, a controller, an application specific integrated circuit (ASIC), etc. The processor 617 may be configured to execute various types of digital storage instructions, such as a software program or a firmware program stored in the memory 616, which may enable a computing device to provide a wide variety of services.

In some embodiments, the memory 616 may include a volatile memory, such as a random access memory (RAM). The memory 616 may also include a non-volatile memory (NVM), such as a read-only memory (ROM), a flash memory (FM), a hard disk drive (HDD), or a solid-state drive (SSD). The memory 616 may also include a combination of the above-mentioned types of memories 616.

In some embodiments, the device body 610 according to some embodiments of the present disclosure may further include a camera module 618. The camera module 618 may be disposed in the accommodation space. The camera module 618 may be electrically connected to the processor 617 and the battery 500. The camera module 618 may be configured to perform shooting under the control of the processor 617. The battery 500 may be also configured to supply power to the camera module 618.

In some embodiments, the housing 615 may be provided with a light-transmitting portion 6151. The camera module 618 may perform shooting through the light-transmitting portion 6151 on the housing 615. That is, the camera module 618 according to some embodiments of the present disclosure may be a rear camera module 618. It will be understood that in some embodiments, the light-transmitting portion 6151 may be disposed on the display screen 611. That is, the camera module 618 may be a front camera module 618. In the schematic diagrams of some embodiments, the light-transmitting portion 6151 may be illustrated as an opening. In other embodiments, the light-transmitting portion 6151 may not be an opening, but may be made of a light-transmitting material, such as plastic, glass, etc.

In the present disclosure, reference to "embodiments" or "implementations" means that a particular feature, structure, or characteristic described in connection with some embodiments may be included in at least one embodiment of the present disclosure. The appearances of the phrase in various places in the specification are not necessarily all referring to the same embodiment, nor are they independent or alternative embodiments mutually exclusive of other embodiments. It is explicitly and implicitly understood by those skilled in the art that the embodiments described in the present disclosure may be combined with other embodiments. In addition, it should also be understood that the features, structures, or characteristics described in the various embodiments of the present disclosure may be combined in any manner as long as there is no contradiction therebetween, so as to form yet another embodiment that does not depart from the spirit and scope of the technical solutions of the present disclosure.

Finally, it should be noted that the above embodiments are merely illustrative of the technical solutions of the present disclosure and are not limiting thereto. Although the present disclosure has been described in detail with reference to the above preferred embodiments, those skilled in the art should understand that modifications or equivalent substitutions to the technical solution s of the present disclosure should not depart from the spirit and scope of the technical solutions of the present disclosure.

## Claims

1. A negative electrode active particle, comprising:
a framework, comprising a plurality of pores; and
silicon particles, located in the plurality of pores, wherein gaps are defined between the silicon particles and inner walls of the plurality of pores, and widths of the gaps are in a range from 0.4 nm to 1 nm; and
wherein the negative electrode active particle exhibits a first X-ray diffraction pattern, and the gaps and the silicon particles in the first X-ray diffraction pattern satisfy a relationship of 0.6≤Ia/Ib≤0.95;
where Ia is a minimum value of a diffraction intensity in a range of 2θ from 8.8° to 22° in the first X-ray diffraction pattern, Ib is an intensity of a diffraction peak of Si(111) in a range of 2θ from 28.2° to 28.5° in the first X-ray diffraction pattern, and 2θ is a diffraction angle.

2. The negative electrode active particle as claimed in claim 1, wherein the gaps and the silicon particles in the first X-ray diffraction pattern satisfy a relationship of 0.6≤Ia/Ib≤0.85.

3. The negative electrode active particle as claimed in claim 1, wherein an average pore size of the plurality of pores is in a range from 0.8 nm to 4 nm.

4. The negative electrode active particle as claimed in claim 1, wherein a pore volume V of the framework 10 is in a range from 0.2 cm³/g to 1.5 cm³/g.

5. The negative electrode active particle as claimed in claim 1, wherein the negative electrode active particle exhibits a second X-ray diffraction pattern after being subjected to a heat treatment, and the gaps and the silicon particles in the second X-ray diffraction pattern satisfy a relationship of 0.5≤Ic/Id≤0.95;
where Ic is a minimum value of a diffraction intensity in the range of 2θ from 8.8° to 22° in the second X-ray diffraction pattern, and Id is an intensity of the diffraction peak of the Si(111) in the range of 2θ from 28.2° to 28.5° in the second X-ray diffraction pattern;
wherein the heat treatment comprises: heating to 700 °C under an inert atmosphere, holding at 700 °C for 2 h, and cooling to room temperature.

6. The negative electrode active particle as claimed in claim 5, wherein the gaps and the silicon particles in the second X-ray diffraction pattern satisfy a relationship of 0.5≤Ic/Id≤0.85.

7. The negative electrode active particle as claimed in claim 1, further comprising:
a carbon coating layer, coating an outer periphery of the framework.

8. The negative electrode active particle as claimed in claim 7, wherein a thickness of the carbon coating layer is in a range from 1 nm to 1000 nm.

9. The negative electrode active particle as claimed in claim 7, wherein a total mass fraction of silicon element and carbon element in the negative electrode active particle is greater than or equal to 90%, and a mass ratio of the silicon element to the carbon element is in a range from 1:99 to 95:5.

10. The negative electrode active particle as claimed in claim 7, wherein the framework is a porous carbide, and the porous carbide comprises at least one of nitrogen element, oxygen element, fluorine element, chlorine element, titanium element, zirconium element, vanadium element, molybdenum element, tungsten element, aluminum element, or iron element; and
wherein a mass fraction of silicon element in the negative electrode active particle is in a range from 1% to 95%, and a total mass fraction of the porous carbide and the carbon coating layer in the negative electrode active particle is in a range from 5% to 99%.

11. The negative electrode active particle as claimed in claim 7, wherein a median particle size D50 of the negative electrode active particle satisfies 300 nm≤D50≤50 µm, an average particle size D1 of the silicon particles satisfies 0.4 nm≤D1≤2 nm, and a specific surface area S of the negative electrode active particle satisfies 0.1 m²/g≤S≤30 m²/g.

12. The negative electrode active particle as claimed in claim 1, further comprising:
a doping element, comprising at least one of a non-metal element or a metal element.

13. The negative electrode active particle as claimed in claim 1, wherein a specific capacity of the negative electrode active particle is in a range from 1700 mAh/g to 2000 mAh/g.

14. The negative electrode active particle as claimed in claim 1, wherein a capacity retention rate of the negative electrode active particle after 50 cycles is greater than or equal to 95%.

15. A preparation method for a negative electrode active particle, comprising:
providing a framework, wherein the framework comprises a plurality of pores; and
introducing a silicon-source gas into the framework to deposit silicon particles in the plurality of pores to obtain the negative electrode active particle, wherein gaps are defined between the silicon particles and inner walls of the plurality of pores, and widths of the gaps are in a range from 0.4 nm to 1 nm; and
wherein the negative electrode active particle exhibits a first X-ray diffraction pattern, and the gaps and the silicon particles satisfy a relationship of 0.6≤Ia/Ib≤0.95;
where Ia is a minimum value of a diffraction intensity in a range of 2θ from 8.8° to 22° in the first X-ray diffraction pattern, and Ib is an intensity of a diffraction peak of Si(111) in a range of 2θ from 28.2° to 28.5° in the first X-ray diffraction pattern.

16. The preparation method as claimed in claim 15, wherein the introducing the silicon-source gas into the framework to deposit the silicon particles in the plurality of pores to obtain the negative electrode active particle comprises:
introducing, at a temperature T1 satisfying 400 °C≤T1≤700 °C, the silicon-source gas to deposit the silicon particles in the plurality of pores, and controlling a ratio t/V of a deposition time t of the silicon particles to a pore volume V of the framework to satisfy 10 gh/cm³≤t/V≤500 gh/cm³.

17. The preparation method as claimed in claim 15 or 16, wherein a ratio m/V' of a mass m of the silicon-source gas to a total volume V' of the plurality of pores of the framework satisfies 0.05 g/cm³≤m/V'≤1.8 g/cm³.

18. A negative electrode plate, comprising:
a negative electrode current collector; and
a negative electrode active layer, wherein the negative electrode active layer is disposed on a surface of the negative electrode current collector, and the negative electrode active layer comprises the negative electrode active particle as claimed in any one of claims 1 to 14 or a negative electrode active particle prepared by the preparation method for the negative electrode active particle as claimed in any one of claims 15 to 17.

19. A battery, comprising:
an electrolyte;
a positive electrode plate, at least partially immersed in the electrolyte;
a separator, located on a side of the positive electrode plate and at least partially immersed in the electrolyte; and
the negative electrode plate as claimed in claim 18, disposed on a side of the separator facing away from the positive electrode plate and at least partially immersed in the electrolyte.

20. An electronic device, comprising:
a device body; and
the battery as claimed in claim 19, configured to supply power to the device body.
